# EUROPÄISCHE PATENTSCHRIFT

(11) **EP 3 170 636 B1**
(45) Veröffentlichungstag und Bekanntmachung des Hinweises auf die Patenterteilung: **31.10.2018**
(21) Anmeldenummer: 16197984.4
(22) Anmeldetag: 09.11.2016
(51) Int. Cl.: B27N 1/00, B27N 3/00, B27N 3/02, B32B 21/02, B32B 21/08, B27N 7/00, B27N 3/06

(54) **HOLZWERKSTOFFPLATTE AUS EINEM HOLZ-KUNSTSTOFF-VERBUNDWERKSTOFF UND ISOCYANAT, UND EIN VERFAHREN ZU DEREN HERSTELLUNG**
COMPOSITE WOOD PANEL MADE FROM A WOOD-PLASTIC COMPOSITE MATERIAL AND ISOCYANATE, AND A METHOD FOR THEIR PREPARATION
PLAQUE EN BOIS COMPRENANT UNE MATIÈRE COMPOSITE BOIS/PLASTIQUE ET DE L'ISOCYANATE ET SON PROCÉDÉ DE FABRICATION

(30) Priorität: 12.11.2015 DE 102015119546
(43) Veröffentlichungstag der Anmeldung: 24.05.2017
(73) Patentinhaber: Flooring Technologies Ltd., Kalkara SCM1001 (MT)
(72) Erfinder: HECHT, Hendrik, 16816 Buskow (DE); KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 829 415
- WO-A1-2013/000791
- WO-A1-2015/000793
- WO-A1-2015/152802
- CN-B- 103 831 885
- US-A1- 2003 008 130
- US-A1- 2008 246 177
- US-B1- 6 344 504
- Anonymous: "Wood-plastic composite - Wikipedia", , 9. September 2015 (2015-09-09), XP055389584, Gefunden im Internet: URL:https://en.wikipedia.org/w/index.php?t itle=Wood-plastic_composite&oldid=68026248 1 [gefunden am 2017-07-11]
- Anonymous: "Imprägnierung", , 3. September 2015 (2015-09-03), XP055389596, Internet Gefunden im Internet: URL:https://de.wikipedia.org/w/index.php?t itle=Imprägnierung&oldid=145680870 [gefunden am 2017-07-11]

## Beschreibung

Die vorliegende Erfindung betrifft eine Holzwerkstoffplatte, insbesondere in Form eines Holz-Kunststoff-Verbundwerkstoffs gemäß Anspruch 5 und ein Verfahren zur Herstellung einer solchen Holzwerkstoffplatte nach Anspruch 1.

Bei einer Vielzahl von Bodenbelägen ist in der Nutzung ein grundsätzliches Problem die durch Feuchtigkeit und/oder Wasser hervorgerufenen Materialschäden, wobei zu Materialschäden nicht nur die Materialzerstörung sondern auch die Verschlechterung der Produkteigenschaften oder das Auftreten von Gerüchen gezählt werden muss. Während bei textilen Bodenbelägen eben durch diese Beanspruchung das Auftreten von Wasserrändern, Gerüchen oder im schlimmsten von Fall von Schimmel beobachtbar ist, sind bei lackierten Produkten meist Oberflächenbeeinträchtigungen, wie Mattierungen, feststellbar.

Neben textilen Bodenbelägen ist die Verwendung von Holzwerkstoffplatten, z.B. in Form von Holzfaserplatten in unterschiedlichen Ausgestaltungen zur Verwendung als Fußbodenlaminat oder zur Verkleidung von Wänden oder auch bei der Herstellung von Möbeln seit langem bekannt. So werden beispielsweise Holzfaserplatten in Form von mitteldichten Holzfaserplatten (MDF-Platten), hochdichten Holzfaserplatten (HDF-Platten), Spanplatten oder OSB-Platten (oriented strand board) verwendet, welche durch Verpressen entsprechender Holzfasern oder Späne mit einem duroplastischen Kunststoffharz als Bindemittel gewonnen werden.

Ein besonderes Problem bei der Verwendung der genannten Holzfaserplatten besteht in der Empfindlichkeit der eingesetzten Holzfasern oder Holzspäne gegenüber hohen Luftfeuchten und direktem Wasserkontakt. Während dieses Problem bei Möbeln oder Produkten für den Innenausbau durch konstruktive oder technologische Maßnahmen relativ leicht beherrscht werden kann, ist dies bei Bodenbelägen z.B. Laminatböden auf der Basis von Holz oder Holzwerkstoffen häufig deutlich problematischer.

Bodenbeläge auf der Basis von Holz oder Holzwerkstoffplatten wie Laminatböden oder Fertigparkett reagieren auf Wasserkontakt schnell mit Quellungen und/oder Dimensionsänderungen, die sich von leichten Kantenquellungen bis hin zu Gefügezerstörungen entwickeln können. Dies wird u.a. durch Einwirkungen von Pflegemitteln auf Wasserbasis hervorgerufen, welche teilweise sehr häufig und sehr intensiv verwendet werden. Auch können hohe Luftfeuchten vergleichbare Prozesse auslösen. Darüber hinaus steht der Bodenbelag typischerweise auch in einem direkten Kontakt mit den Gebäudeteilen wie z.B. Betondecken/Estrich oder Wänden, die ebenfalls Feuchtigkeit in dem Bodenbelag transportieren können. Aus diesem Grund wird bei der Herstellung der oben genannten Holzwerkstoffprodukte auf quellarme Hölzer oder Holzwerkstoffe zurückgegriffen, was zwar die beschriebenen Probleme mindern, aber nicht gänzlich beheben kann. Teilweise kommen auch anorganische Trägerplatten zur Herstellung von Produkten mit Holzoberflächen zum Einsatz, wobei es hier zu Verklebungs-, Bearbeitungs- oder Verlegeproblemen kommen kann.

Die Feuchteschäden sind umso gravierender, je stärker das Holz oder der Holzwerkstoff bei der Herstellung des Produktes verdichtet worden ist. Dadurch wird bei der Beaufschlagung mit Wasser der Quelldruck stark erhöht. Daraus erklärt sich zum Beispiel die deutliche Reaktion von Laminatböden oder lackierten Holzwerkstoffen auf direkte Wasserbeaufschlagung. Eine Vielzahl von Maßnahmen (quellvergütete Platten, Kantenversiegelung usw.) hat zwar bezüglich der Empfindlichkeit gegenüber Wasser/Feuchtigkeit zu Verbesserungen geführt, konnte die Probleme nicht vollständig lösen.

Als Alternative zur Verwendung von Laminatböden mit dem genannten Quellungsproblem wurden in der Vergangenheit zunehmend Bodenbeläge auf Basis von Polyvinylchlorid (PVC) eingesetzt, die eine sehr niedrige bis gar keine Quellung besitzen. Nachteilig bei der Verwendung von PVC-Fußböden ist allerdings deren hohe Kratzanfälligkeit und Kriechneigung, was insbesondere in hochfrequentierten Bereichen (wie z.B. Verkaufsbereichen) zu einer schnellen Abnutzung und Unansehnlichkeit des Fußbodenbelages führt.

Aus diesen Gründen hat man in der Vergangenheit häufig sogenannte wood-plasticcomposites (WPC) als Trägermaterialien für Holzprodukte verwendet. Diese Trägermaterialien besitzen eine sehr geringe Quellung von weniger als 3% und eine hohe Dimensionsstabilität.

WPCs sind thermoplastisch verarbeitbare Verbundwerkstoffe auf der Basis von Holzmehl oder Holzspänen und thermoplastischen Kunststoffen, welchen ggf. noch weitere Additive zugesetzt werden können. Die Gemische aus Holzfasern und Thermoplasten werden aufgeschmolzen und zu Agglomeraten verarbeitet. Im weiteren Herstellungsprozess werden die Agglomerate in Extrudern aufgeschmolzen und zu relativ kleinformatigen Platten verarbeitet. Die Breite der Platten liegt hierbei meist in einem Bereich von weniger als einem Meter bedingt durch den Herstellungsprozess in einem Extruder. Auch liegt die Produktivität pro Stunde in einem niedrigen einstelligen Quadratmeterbereich, so dass die Kombination aus niedriger Produktivität und begrenzter Plattengröße relativ hohe Kosten der so hergestellten WPC-Platten begründet.

Weiter liegt der Kunststoffanteil in dem Werkstoff bei mindestens 30 Gew. %, meist sogar bei bis zu 70 Gew. %. Diese Menge an Kunststoff wird benötigt, um die gewünschten Eigenschaften (Quellarmut, Witterungsbeständigkeit usw.) zu erreichen.

Holzfasermatten, die durch Thermobonding hergestellt werden, sind aus DE 102004056131 bekannt. Diese offenbart einen Holzfaserdämmstoff, bei dem Holzfasern und Kunststofffasern innig vermischt und als Vlies in einen Thermobond-Ofen eingebracht werden, wobei das Vlies von heißer Luft durchströmt, den Kunststoff derart schmilzt, das Verklebungspunkte entstehen.

Das verwendete Holz muss auf definierte Korngrößen gemahlen werden, eine niedrige Feuchte (< 5%) besitzen und frei von Störstoffen und mineralischen Bestandteilen sein. Diese Vorbedingungen führen ebenfalls zu erheblichen Kosten, die in Summe mit der niedrigen Produktivität, zu teuren Trägermaterialien führen. Durch die nachträgliche Dekorierung und Profilierung (z. B. bei Bodenbelägen) treten Materialverluste und Kosten auf. Im Endeffekt hat man dann ein Produkt, dass zwar ein sehr gutes Eigenschaftsprofil besitzt und je nach eingesetztem Kunststoff frei von Weichmachern und Halogenen ist, aber preislich sehr deutlich über ähnlichen Produkten liegt.

Verfahren und Vorrichtungen zur Herstellung von Holz-Kunststoff-Verbundwerkstoffplatten werden unter anderem in EP 2 829 415 A1 und US 2003/ 0 008 130 A1 offenbart. Die US 6,344,504 B1 betrifft Holzersatzmaterialien, insbesondere einen Holz-Polymer-Verbundwerkstoff, der zur Verwendung anstelle von natürlichem Holz geeignet ist. Offenbart wird auch ein Verfahren zur Herstellung der Verbundwerkstoffe.

Die US 2008/246177 A1 betrifft ein Verfahren zur Herstellung von Formkörpern aus feinteiligen Materialien auf Basis von Lignocellulose sowie die hierdurch erhältlichen Formkörper. Offenbart wird außerdem die Verwendung wässriger Zusammensetzungen, die wenigstens eine vernetzbare Harnstoffverbindung enthalten, zur Herstellung von mit dieser Zusammensetzung behandelten feinteiligen Materialien auf Basis von Lignocellulose für die Herstellung von Formkörpern.

CN 103 831 885 B beschreibt ein Verfahren für das Aufbringen einer dekorativen Folie auf einen Holz-Kunststoff-Verbundwerkstoff ohne Verwendung von herkömmlichem Holzleim.

WO 2015/152802 offenbart ein Verfahren zur Herstellung einer Holzwerkstoffplatte in Form eines Holz-Kunststoff-Verbundwerkstoffs, wobei der Holz-Kunststoff-Verbundwerkstoff eine Oberflächenschicht 4 und eine untere Ausgleichsschicht 6 aufweisen. Die Schichten 4 und 6 enthalten typischerweise Melaminformaldehyd, Harnstoffformaldehyd oder Phenolformaldehyd. Während der Herstellung werden die Schichten 4 und 6 zu einem Laminat verpresst. Als Kern enthält der Holz-Kunststoff-Verbundwerkstoff einen WPP-Kern 1', der aus einer Mischung aus Holzpartikeln und thermoplastischen Kunststoffen besteht.

Die US 20070042664 A1 beschreibt die Herstellung eines faserhaltigen Komposites, wobei das Komposit aus zellulosehaltigen Fasern (Bastfasern) und Bindefasern (zum Beispiel in Form von Bikomponentenfasern) besteht. Der Anteil an zellulosehaltigen Fasern kann 30-70 Gewichtsprozent, bevorzugt 30-60 Gewichtsprozent betragen. Der Anteil an Bindefasern kann ebenfalls zwischen 30-70 Gewichtsprozent, bevorzugt 30-60 Gewichtsprozent betragen. Die Dichte des faserhaltigen Komposites liegt in einem Bereich zwischen 0,08-2 g/cm³. Zur Herstellung des faserhaltigen Komposites wird zunächst eine Mischung aus 40 Gew.% Bikomponentenfasern und 60 Gew.% von zellulosehaltigen Fasern auf ein Transportband mittels Aufblasen aufgebracht. Das abgelegte Vlies wird durch einen Ofen geführt, in welchem das Komposit durch Luft auf eine Temperatur von 170 °C erwärmt wird, wobei die Bindefasern teilweise schmelzen. Anschließend wird das Komposit durch einen Kompressionsofen geführt, in welchem die Bänder auf eine Temperatur von ungefähr 204 °C erwärmt sind. Nach Durchlauf durch den Kompressionsofen weist das Komposit eine Dicke von 3,3 mm auf. Zur Kompression wird ein sogenannter "Hot belt laminator" eingesetzt. Nach Abkühlen kann das Komposit zugeschnitten werden.

Darüber hinaus ist das Heißpressen zur Herstellung von Holzfaserwerkstoffen, wie beispielsweise mitteldichten Faserplatten (MDF-Platten) ein im Stand der Technik allgemein bekanntes Verfahren.

Aber auch der Einsatz von Holzfasern aus einem MDF-Prozess in Kombination mit Kunststofffasern, die nach Vermischung zunächst in einem Thermobond-Ofen zu einem Faserkuchen vorverdichtet und dann in einer Contipresse auf die gewünschte Stärke nachverdichtet werden, löst das Problem nur teilweise. Zwar können nun Formate bis 2700 mm Breite produziert werden, allerdings ist der Kunststoffanteil immer noch sehr hoch. Auch müssen Fasern mit einem integrierten Haftvermittler verwendet werden, die deutlich teurer sind als Standardfasern.

Entsprechend ergeben sich hieraus die Nachteile einer niedrigen Produktivität, begrenzten Plattengröße und einem somit aufwendigen und teuren Verfahren. Außerdem sind in dem herkömmlichen Prozess nur spezielle Fasern einsetzbar.

Der Erfindung liegt daher die technische Aufgabe zu Grunde, die oben angeführten Probleme bezüglich der Kosten und der Technologie zu lösen. Dabei sollen Technologien und Rohstoffe zum Einsatz kommen, die den Herstellungsprozess nicht verkomplizieren oder erhebliche Nachrüstungen erfordern. Es soll dabei ein Produkt entstehen, das im Eigenschaftsprofil möglichst nahe an einer WPC-Platte liegt.

Diese Aufgabe wird mit einer Holzwerkstoffplatte nach Anspruch 5 und einem Verfahren zur Herstellung dieser Holzwerkstoffplatte nach Anspruch 1 gelöst.

Gelöst wird diese Aufgabe durch die Verwendung eines Isocyanat-Klebstoffs bei gleichzeitiger Reduzierung des Kunststoffanteils/ Kunststofffaser-Anteils in der Platte. Dabei wird zunächst aus Holz- und Kunststoffasern ein Faserkuchen hergestellt, der in einem Thermobonding-Ofen erwärmt und vorverdichtet wird. Nach Verlassen des Ofens wird auf den Faserkuchen ein Isocyanat-Klebstoff aufgebracht. Die Einsatzmenge der Kunststofffasern kann durch die Verwendung des Isocyanat-Klebstoffs um bis zu 30%, vorzugsweise um bis zu 50 %, am meisten bevorzugt um bis zu 70% reduziert werden.

Erfindungsgemäß wird eine Holzwerkstoffplatte, die in dem Anspruch 5 definiert ist, insbesondere in Form eines Holz-Kunststoff-Verbundwerkstoffes, bereitgestellt, welche Holzpartikel und mindestens einen Kunststoff umfasst, wobei der mindestens eine Kunststoff bevorzugt mit mindestens einer organischen Verbindung funktionalisiert ist. Die mindestens eine organische Verbindung weist bevorzugt mindestens eine funktionelle Gruppe auf, die insbesondere zur Ausbildung einer Bindung mit den OH-Gruppen der in den Holzfasern enthaltenen Verbindungen (Cellulose, Hemicellulose und Lignin) fähig ist.

Die erfindungsgemäße Holzwerkstoffplatte ist weiterhin mit einem Isocyanat-Klebstoff versehen. Der Isocyanat-Klebstoff kann entweder einseitig oder auf beiden Seiten der Holzwerkstoffplatte aufgebracht sein. Vorzugsweise wird der Isocyanat-Klebstoff auf der Oberseite der Holzwerkstoffplatte aufgebracht. Der Isocyanat-Klebstoff kann je nach gewünschtem Produkt partiell oder vollflächig auf mindestens eine Seite der Holzwerkstoffplatte aufgebracht sein. Auch kann die Auftragsmenge und die Art und Weise des Auftragens so gesteuert werden, dass eine teilweise oder eine vollständige Imprägnierung des Faserkuchens erreicht wird.

Das Gemisch aus Holzpartikeln und mindestens einem mit mindestens einer organischen Verbindung funktionalisierten Kunststoff ist vollständig mit dem Isocyanat-Klebstoff imprägniert. Gemäß dem nachfolgend beschriebenen Herstellungsverfahren der Holzwerkstoffplatte wird der Isocyanat-Klebstoff auf die Oberseite des Faserkuchens bzw. vorverdichteten Vlieses aufgetragen. Das Imprägnieren und Durchdringen des Faserkuchens mit dem Isocyanat-Klebstoff kann während der Herstellung der Holzwerkstoffplatte durch ein unterhalb des vorverdichteten Vlieses anliegendes Vakuum oder einen Unterdruck und/oder von oben anliegendem Druck erreicht werden. Weiter kann durch Erwärmen der Isocyanatkomponente die Viskosität erniedrigt werden, was die Durchimprägnierung des Faserkuchens zusätzlich erleichtert. Typische Temperaturen sind dabei 30 - 70 °C.

Die Verwendung von Isocyanat-Klebstoffen zur Herstellung von herkömmlichen Holzwerkstoffplatten, wie zum Beispiel OSB-Platten, ist an sich bekannt. So offenbart die Patentschrift DE 10 2008 034 749 B3 das Aufgeben eines Vernetzungsmittels auf einen Holzwerkstoff, um diesen partiell zu vergüten. Das Vernetzungsmittel soll einzelne Teilbereiche einer großformatigen Holzfaserplatte bezüglich der Festigkeit vergüten, um in diesen Bereichen spätere Anforderungen an das Produkt, beispielsweise als Fußbodenpaneel, zu erfüllen. Als Vernetzungsmittel wird unter anderem Isocyanat-Präpolymer vorgeschlagen, welches beispielsweise aufgestrichen, aufgesprüht, aufgeschwemmt oder aufgerollt wird.

Die WO2015/000793 A1 beschreibt eine Holz-Kunststoff-Verbundwerkstoffplatte, umfassend eine Kernschicht, die ein modifiziertes Polyolefin, beispielsweise gepfropftes Polyethylen, und Holzpartikel aufweist, und eine Deckschicht, die eine verschleißfesten Schutzschicht und eine Dekorschicht umfasst. Die Kernschicht ist mit der Dekorschicht mittels einem PU-Heißkleber verbunden, d.h. in WO2015/000793 A1 wird ein PU-Kleber verwendet, um zwei Schichten einer Holz-Kunststoff-Verbundwerkstoffplatte, die unterschiedlich aufgebaut sind, miteinander zu verbinden.

Die WO 2013/ 000 791 A1 beschreibt einen Plattensandwich, der u.a. eine Basisplatte bzw. Kernschicht aus einem Holz-Kunststoff-Verbundmaterial umfasst, auf die ein selbstklebenden Kunststoffmaterial als Schall-isolierende Schicht aus einem thermoplastischen, reaktiven PU-Material aufgesprüht ist, d.h. die WO 2013/ 000 791 A1 offenbart die Verwendung von reaktivem PU-Material als distinkte Schicht in einem Plattensandwich.

Isoycanat-Klebstoffe wurden bislang aber noch nicht bei der Herstellung von Holzwerkstoffplatten auf Basis von Holz-Kunststoff-Verbundwerkstoffen eingesetzt, bei denen die Isoycanat-Klebstoffe als Bindemittel für die Verklebung der Holzpartikel und mindestens einem mit mindestens einer organischen Verbindung funktionalisierten Kunststoff, der vorzugsweise in Form von Kunststoffasern vorliegt, verwendet werden. Solch eine Verwendung des Isocyanat-Klebstoffs hat mehrere Vorteile. Einerseits kann der Anteil an Kunststofffasern reduziert und andererseits die zur Bindung der Holzwerkstoffplatten notwendige Klebkraft ausgeglichen werden.

Es wird eine Holzwerkstoffplatte, insbesondere eine Holz-Kunststoff-Verbundwerkstoffplatte, bereitgestellt, die ein Gemisch aus Holzpartikeln und mindestens einen mit mindestens einer organischen Verbindung funktionalisierten Kunststoff umfasst, wobei auf mindestens einer Seite der Holzwerkstoffplatte mindestens eine Dekorschicht vorgesehen ist, wobei das Gemisch aus Holzpartikeln und dem mindestens einen mit mindestens einer organischen Verbindung funktionalisierten Kunststoff teilweise oder vollständig mit dem Isocyanat-Kleber imprägniert ist und wobei das teilweise oder das vollständige Imprägnieren des Gemisches aus Holzpartikeln und mindestens einem mit mindestens einer organischen Verbindung funktionalisierten Kunststoff durch folgenden Maßnahmen erreicht worden ist:
- Auftragen des Isocyanat-Klebstoffs auf die Oberseite des vorverdichteten Vlieses während der Herstellung der Holzwerkstoffplatte;
- Anlegen eines Vakuums oder Unterdrucks unterhalb des Faserkuchens während und/oder nach dem Auftragen des Isocyanat-Klebstoffs; und/oder
- Anlegen von Druck von oben während und/oder nach dem Auftragen des Isocyanat-Klebstoffs; und/oder
- Erwärmen des Isocyanat-Klebstoffs zur Erniedrigung der Viskosität des Isocyanat-Klebstoffs und zur Erleichterung der Durchimprägnierung des vorverdichteten Vlieses, wobei der Isocyanat-Klebstoff typischerweise auf Temperaturen zwischen 30 - 70 °C erwärmt wird.

Der Isocyanat-Klebstoff ist vorzugsweise ausgewählt aus einem Polyurethan-Klebstoff oder einem PU-Präpolymer davon.

Vorliegend ist die Verwendung eines Polyurethan-Klebstoffes bevorzugt, wobei der Polyurethan-Klebstoff auf der Basis von aromatischen Polyisocyanaten, insbesondere Polydiphenylmethandiisocyanat (PMDI), Tolulendiisocyanat (TDI) und/oder Diphenylmethandiisocyanat (MDI) vorliegt, wobei PMDI besonders bevorzugt ist.

In einer weiteren Ausführungsform sind Polyurethan-Präpolymere bevorzugt. Zur Herstellung von Polyurethan-Präpolymeren werden Polyole mit den vorstehend genannten Isocyanaten zur Reaktion gebracht. Geeignete Polyole sind dem Fachmann geläufig. Sie haben typischerweise ein Molekulargewicht von etwa 500 bis etwa 6.000 und/oder zwei bis vier Hydroxylgruppen. Besonders bevorzugte Polyole sind Polyester, Polyether, Polythioether, Polyacetale und Polycarbonate mit jeweils zwei bis vier Hydroxylgruppen. Bevorzugte Polyether im Rahmen der Erfindung sind dem Fachmann an sich bekannt und können bspw. hergestellt werden durch Polymerisierung von Epoxiden wie Ethylenoxid, Propylenoxid, Butylenoxid, Tetrahydrofuran, Styroloxid oder Epichlorhydrin in Gegenwart von BF3, oder durch Addition von Epoxiden, insbesondere von Ethylenoxid oder Propylenoxid an reaktive Wasserstoffe enthaltende Moleküle wie bspw. Wasser, Alkohol oder Amine (bspw. niedermolekulare Diole, Triole oder Tetrole; 4,4'-Dihydroxydiphenylpropan; Anilin; Ammoniak; Ethanolamin; Ethylendiamin). Polypropylenglykol und Polytetramethylenglykol (PTMG oder PTMEG) sind gegenwärtig bevorzugt.

In der Präpolymer-Herstellung können auch an sich bekannte Kettenverlängerer eingesetzt werden, insbesondere Di-/Polyole von niedrigem Molekulargewicht (typischerweise kleiner als 400g/mol). Genannt werden insbesondere Ethylenglykol , Propylenglykol, Butanglykol, Pentanglykol, Hexanglykol, Benzylglykol, Xylolglykol, Wasser, 1,4-Butandiol, 1,3-Butandiol , 2,3-Dimethyl-2.3-Butandiol, Dipropylenglykol und Tripropylenglycol, Di- und Triethlylenglykol, N-N'-bis-(2-Hydroxypropylanilin) (DHPA), 1,4-di-(2-Hydroxyethyl)hydrochinon (HQEE), Diethanolamin, Triethanolymin, Trimethylolpropan, Glycerin.

Polyalkenylpolyole, Polyetherpolyole oder Polyesterpolyole oder gemischte Polyesterpolyetherpolyole mit vorzugsweise 2 oder 3 Hydroxylendgruppen können mit einem wohldefinierten Überschuss an Isocyanate zu NCO-terminierten Urethanprepolymeren umgesetzt werden. Sie sind auch im Handel erhältlich bspw. von der BAYER AG z. B. unter den Handelsmarken Desmodur® E22 oder E23. Destillierte Produkte, bei denen die Entfernung des überschüssigen Diisocyanates zu f_{NCO} = 2 führt, sind ebenfalls bekannt und können verwendet werden.

Die vorliegende Holzwerkstoffplatte weist zudem mindestens eine Dekorschicht auf, die auf mindestens einer Seite, bevorzugt der Oberseite der Platte, aufgetragen ist.

Die Holzwerkstoffplatte wird in einem Verfahren hergestellt, welches die folgenden Schritte umfasst:
- Aufbringen eines Gemisches aus Holzpartikeln und einem mit mindestens einer organischen Verbindung funktionalisierten Kunststoff, auf ein erstes Transportband unter Ausbildung eines Vorvlieses und Einführen des Vorvlieses in mindestens einen ersten Temperofen zum Vorverdichten;
- Auftragen eines Isocyanat-Klebstoffs auf mindestens einer Seite des vorverdichteten Vlieses,
- teilweises oder vollständiges Imprägnieren des vorverdichteten Vlieses mit dem Isocyanat-Klebstoff;
- Überführen des vorverdichteten Vlieses in mindestens eine Doppelbandpresse zum weiteren Verdichten zu einer Holzwerkstoffplatte; und
- optional Abkühlen der verdichteten Holzwerkstoffplatte in mindestens einer Kühlpresse.

Die vorliegende Holzwerkstoffplatte wird in einem mehrstufigen Prozess, insbesondere in einem dreistufigen Prozess hergestellt, in welchem zunächst aus einem Gemisch von Holzpartikeln, z.B. in Form von Holzfasern, und funktionalisierten Kunststoffen, insbesondere thermoplastischen Kunststoffen, ein vorverdichtetes Vlies bzw. eine Dämpfstoffmatte mit einer niedrigen Rohdichte hergestellt wird.

Nach Herstellung des vorverdichteten Vlieses bzw. der Dämmstoffmatte wird die erfindungsgemäße Holzwerkstoffplatte mit einem Isocyanat-Klebstoff versehen. Der Isocyanat-Klebstoff kann entweder einseitig oder auf beiden Seiten der Holzwerkstoffplatte aufgebracht werden. Vorzugsweise wird der Isocyanat-Klebstoff auf der Oberseite der Holzwerkstoffplatte aufgebracht. Der Isocyanat-Klebstoff kann auf herkömmliche Weise durch Sprühapparaturen, Injektionsdüsen oder Walzen auf die Oberseite des Faserkuchens aufgebracht werden. Das Aufbringen des Isocyanat-Klebstoffs kann je nach gewünschtem Produkt partiell oder vollflächig erfolgen. Auch die Auftragsmenge kann so gesteuert werden, dass entweder nur eine Oberflächenvergütung, eine teilweise oder eine im Wesentlichen vollständige Imprägnierung, besonders bevorzugt eine vollständige Imprägnierung des Faserkuchens erfolgt. Unterstützt werden kann diese Behandlung durch ein unterhalb des Faserkuchens anliegendes Vakuum oder einen Unterdruck und/oder von oben anliegendem Druck. Diese Unterstützung der Imprägnierung kann während oder nach dem Auftrag des Isocyanat-Klebstoffs erfolgen. Weiter kann durch Erwärmen der Isocyanatkomponente die Viskosität erniedrigt werden, was die Durchimprägnierung des Faserkuchens zusätzlich erleichtert. Typische Temperaturen sind dabei 30 - 70 °C.

In einer bevorzugten Ausführungsform stellt die Offenbarung ein Verfahren zur Herstellung einer Holzwerkstoffplatte, insbesondere eine Holz-Kunststoff-Verbundwerkstoffplatte, bereit, bei der das Gemisch aus Holzpartikeln und mindestens einem mit mindestens einer organischen Verbindung funktionalisierten Kunststoff vollständig mit einem Isocyanat-Kleber imprägniert wird.

In einer bevorzugten Ausführungsform umfasst das Verfahren zur Herstellung der Holzwerkstoffplatte, insbesondere der Holz-Kunststoff-Verbundwerkstoffplatte deshalb die Schritte:
- Aufbringen eines Gemisches aus Holzpartikeln und einem mit mindestens einer organischen Verbindung funktionalisierten Kunststoff, auf ein erstes Transportband unter Ausbildung eines Vorvlieses und Einführen des Vorvlieses in mindestens einen ersten Temperofen zum Vorverdichten;
- Auftragen eines Isocyanat-Klebstoffs auf die Oberseite des vorverdichteten Vlieses,
- vollständiges Imprägnieren des vorverdichteten Vlieses mit dem Isocyanat-Klebstoff;
- Überführen des vorverdichteten Vlieses in mindestens eine Doppelbandpresse zum weiteren Verdichten zu einer Holzwerkstoffplatte; und
- optional Abkühlen der verdichteten Holzwerkstoffplatte in mindestens einer Kühlpresse; wobei das vollständige Imprägnieren des vorverdichteten Vorvlieses durch folgenden Maßnahmen erreicht wird:
   - Auftragen des Isocyanat-Klebstoffs auf die Oberseite des vorverdichteten Vlieses während der Herstellung der Holzwerkstoffplatte;
   - Anlegen eines Vakuums oder Unterdrucks unterhalb des vorverdichteten Vlieses während und/oder nach dem Auftragen des Isocyanat-Klebstoffs; und/oder
   - Anlegen von Druck von oben während und/oder nach dem Auftragen des Isocyanat-Klebstoffs; und/oder
   - Erwärmen des Isocyanat-Klebstoffs zur Erniedrigung der Viskosität des Isocyanat-Klebstoffs und zur Erleichterung der Durchimprägnierung des vorverdichteten Vlieses, wobei der Isocyanat-Klebstoff typischerweise auf Temperaturen zwischen 30 - 70 °C erwärmt wird.

Die Menge des aufgetragenen Isocyanat-Klebstoffs liegt im Bereich von 50 bis 500 g/m² Fläche des vorverdichteten Vlieses, vorzugsweise von 100 bis 400 g/m², besonders bevorzugt von 150 bis 300 g/m². In einer bevorzugten Ausführungsform werden beispielsweise 200 g des Isocyanat-Klebstoffs pro m² des vorverdichteten Vlieses aufgebracht.

In einer anderen Ausführungsform beträgt die Menge des aufgetragenen Isocyanat-Klebstoffs zwischen 1 und 10 Gew.% pro Holzwerkstoffplatte, vorzugsweise zwischen 2 und 8 Gew.%, insbesondere bevorzugt zwischen 4 und 6 Gew.%.

Dieses Vlies bzw. Dämpfstoffmatte mit einer niedrigen Rohdichte wird anschließend zunächst auf einer Doppelbandpresse unter hohem Druck und hoher Temperatur verdichtet und falls nötig anschließend in einer Kühlpresse abgekühlt. Das vorliegende Verfahren ermöglicht die Herstellung von Holzwerkstoffplatten in Form von Holz-Kunststoff-Verbundwerkstoffen bzw. - Composites (WPCs) in großen Formaten, die als Trägerplatten zur Produktion von Bodenbelägen dienen, verbunden mit einer hohen Produktivität und somit niedrigeren Kosten. In einer Ausführungsform wird ein thermoplastischer Kunststoff, insbesondere in Form von Granulaten, Pulver oder Kunststofffasern in dem Holzpartikel-Kunststoff-Gemisch verwendet.

Der thermoplastische Kunststoff ist bevorzugter Weise ausgewählt aus einer Gruppe enthaltend Polyethylen (PE), Polypropylen (PP), Polyester, Polyethylenterephthalat (PET), Polyamid (PA), Polystyrol (PS), Acrylnitril-Butadien-Styrol (ABS), Polymethylmethacrylat (PMMA), Polycarbonat (PC), Polyetheretherketon (PEEK), Polyisobutylen (PIB), Polybutylen (PB), Mischungen oder Copolymerisate davon. Insbesondere ist es bevorzugt, wenn als thermoplastischer Kunststoff PE, PP oder eine Mischung davon eingesetzt wird.

Wie oben erwähnt, kann der thermoplastische Kunststoff in Form von Kunststofffasern eingesetzt werden. Die Kunststofffasern können dabei als Monokomponentenfasern oder als Bikomponentenfasern vorliegen. Die thermisch aktivierbaren Kunststoff- bzw. Bindefasern führen in der Matrix aus Holzfasern bzw. Holzpartikel sowohl eine Binde- als auch eine Stützfunktion aus. Werden Monokomponentenfasern verwendet, bestehen diese bevorzugt aus Polyethylen oder anderen thermoplastischen Kunststoffen mit niedrigem Schmelzpunkt.

Bikomponentenfasern (auch als Biko-Stützfasern bezeichnet) werden besonders bevorzugt eingesetzt. Biko-Fasern erhöhen die Steifigkeit von Holzfaserplatten und verringern auch die bei thermoplastischen Kunststoffen (wie z.B. bei PVC) anzutreffende Kriechneigung.

Die Biko-Fasern bestehen typischerweise aus einem Tragfilament oder auch einer Kernfaser aus einem Kunststoff mit höherer Temperaturbeständigkeit, insbesondere Polyester oder Polypropylen, die von einem Kunststoff mit einem niedrigeren Schmelzpunkt, insbesondere aus Polyethylen, umhüllt bzw. ummantelt sind. Die Hülle bzw. der Mantel der Biko-Fasern ermöglicht nach Aufschmelzen bzw. Anschmelzen eine Vernetzung der Holzpartikel miteinander. Vorliegend werden insbesondere als Bikomponentenfasern solche auf der Basis von Thermoplasten wie PP/PE, Polyester/PE oder Polyester/Polyester verwendet.

Es ist ebenfalls vorstellbar, dass der Kunststoffanteil selbst auch ein Gemisch von verschiedenen Kunststoffen ist. So kann ein Kunststoffgemisch aus 20 Gew.% Bikomponentenfasern : 80 Gew% PE-Fasern bis zu 80 Gew.% Bikomponentenfasern : 20 Gew% PE-Fasern bestehen. Generell sind auch andere Zusammensetzungen möglich. Durch die Veränderung der Zusammensetzung der Kunststoffkomponente kann die zur Verdichtung des Vorvlieses bzw. Vlieses benötigte Temperatur verändert und angepasst werden.

Wie oben angeführt, wird vorliegend mindestens ein Kunststoff verwendet, der mit mindestens einer organischen Verbindung funktionalisiert ist. Die organische Verbindung z.B. in Form eines Monomers, ist wiederum bevorzugt mit mindestens einer funktionellen Gruppe versehen, wobei die funktionelle Gruppe in der Lage ist, mindestens eine Bindung, insbesondere eine chemische Bindung, mit den OH-Gruppen der Zellulose, der Hemicellulose oder des Lignins der Holzpartikel einzugehen. Damit entsteht eine chemische Bindung zwischen dem Kunststoff, insbesondere den Kunststofffasern, und den Holzfasern, wodurch eine Trennung zwischen den beiden Fasertypen bei Wasserbeaufschlagung vermieden wird.

Bei der Verbindung handelt es sich um eine organische Verbindung, deren mindestens eine funktionelle Gruppe ausgewählt aus einer Gruppe enthaltend -CO₂H, - CONH₂, -COO-, insbesondere Maleinsäure, Phthalsäure, Bernsteinsäure, Glutarsäure, Adipinsäure oder deren Anhydride, oder Succinimid.

Die monomere organische Verbindung wie z.B. Maleinsäureanhydrid (MSA) wird auf das unpolare Basispolymer wie z.B. Polypropylen oder Polyethylen in einem Grafting-Verfahren aufgepfropft. Hierbei ist es auch möglich, dass die organische Verbindung mehr als ein Monomer umfasst, z.B. in Form eines Dimers oder Trimers, wobei z.B. jeweils zwei funktionalisierte organische Moleküle oder Verbindungen über ein Brückenmolekül z.B. in Form ein nicht-funktionalisiertes Molekül miteinander verbunden sind. Besonders bevorzugt ist in diesem Zusammenhang ein Trimer aus MSA-Styren-MSA.

Der Pfropfgrad des verwendeten Kunststoffs kann zwischen 0,1 und 5 Gew% an monomerer organischer Verbindung, bevorzugt zwischen 0,5 und 3 Gew%, insbesondere bevorzugt zwischen 1 und 2 Gew% betragen.

Ganz besonders bevorzugt werden eine Mischung aus Polypropylen und Polyethylen, insbesondere in Form von Bikomponenten-Fasern bestehend aus einem Polypropylen-Kern und einer Polyethylen-Hülle verwendet, wobei die unpolaren Basispolymere jeweils mit Maleinsäureanhydrid funktionalisiert sind. Auch können die Bikomponenten-Fasern aus Polyethylenterephthalat/ Polyethylenterephthalat-Co-iso-phthalat mit ggf. aufgepfropftem MSA bestehen.

Es ist auch möglich eine Mischung aus einem Anteil an nicht-modifizierten Bikomponentenfasern (d.h. ohne aufgepfropfter organischer Verbindung) und einem Anteil an mit einer organischen Verbindung funktionalisierten Kunststoff (d.h. mit aufgepfropfter organischer Verbindung) zu verwenden. So ist es denkbar, eine Mischung aus einem Anteil an Polyethylenterephthalat/ Polyethylenterephthalat-Co-iso-phthalat-Fasern und mit Maleinsäueranhydrid gegrafteten Polyethylen (z.B. in Form von LLDPE-Fasern) zu verwenden.

In einer weiteren Ausführungsform des vorliegenden Verfahrens wird ein Holzpartikel-Kunststoff-Gemisch verwendet, welches ein Mischungsverhältnis von Holzpartikeln zu Kunststoff (modifiziert und nicht-modifiziert) zwischen 90 Gew% Holzpartikel : 10 Gew% Kunststoffe und 20 Gew% Holzpartikel : 80 Gew% Kunststoffe, bevorzugt zwischen 70 Gew% Holzpartikel : 30 Gew% Kunststoffe und 40 Gew% Holzpartikel : 60 Gew% Kunststoffe umfasst. Das verwendete Holzpartikel-Kunststoffgemisch kann beispielhaft 72 Gew% Holzfasern bzw. Holzpartikel und 28 Gew% Biko-Fasern, z.B. Polyethylenterephthalat/ Polyethylenterephthalat-Co-Isophthalat-Fasern oder PP/PE-Fasern aufweisen. In einem anderen Beispiel kann das verwendete Holzpartikel-Kunststoffgemisch 62 Gew% Holzfasern bzw. Holzpartikel und 38 Gew% Biko-Fasern, z.B. Polyethylenterephthalat/ Polyethylenterephthalat-Co-Isophthalat-Fasern oder PP/PE-Fasern aufweisen. Ein Mischungsverhältnis von Holzfasern und Kunststofffasern von 50 Gew% zu 50 Gew% ist ganz besonders bevorzugt.

In einer weiteren Ausführungsform des vorliegenden Verfahrens wird eine Holzwerkstoffplatte hergestellt, die ein Verhältnis von einem Holzpartikel-Kunststoff-Gemisch (im Mischungsverhältnis von Holzpartikeln zu Kunststoff wie oben beschrieben) zu einem Isocyanat-Klebstoff von 90 Gew.% Holzpartikel-Kunststoff-Gemisch : 10 Gew.% Isocyanat-Klebstoff, vorzugsweise von 92 Gew.% Holzpartikel-Kunststoff-Gemisch : 8 Gew.% Isocyanat-Klebstoff, besonders bevorzugt von 94 Gew.% Holzpartikel-Kunststoff-Gemisch : 6 Gew.% Isocyanat-Klebstoff oder von 96 Gew.% Holzpartikel-Kunststoff-Gemisch : 4 Gew.% Isocyanat-Klebstoff aufweisen.

Unter den vorliegend verwendeten Holzpartikeln sind lignocellulosehaltige Zerkleinerungsprodukte wie z.B. Holzfasern, Holzspäne oder auch Holzmehl zu verstehen. Im Falle der Verwendung von Holzfasern kommen insbesondere trockene Holzfasern mit einer Länge von 1,0 mm bis 20 mm, bevorzugt 1,5 mm bis 10 mm und einer Dicke von 0,05 mm bis 1 mm zum Einsatz. Die Holzfaserfeuchte der verwendeten Fasern liegt dabei in einem Bereich zwischen 5 und 15 %, bevorzugt 6 und 12 % bezogen auf das Gesamtgewicht der Holzfasern.

Es ist ebenfalls möglich, die verwendeten Holzpartikel in Bezug auf den mittleren Korndurchmesser zu bestimmen, wobei der mittlere Korndurchmesser d50 zwischen 0,05 mm und 1 mm, bevorzugt 0,1 und 0,8 mm betragen kann.

Entsprechend der gewünschten Zusammensetzung des Holzpartikel-Kunststoff-Gemisches werden die einzelnen Komponenten (Holzpartikel und Kunststoff) in einem Mischer innig vermischt. Das Vermischen der Komponenten kann z.B. durch Eingeben in eine Blasleitung erfolgen. Hier erfolgt auf dem Weg von der Zugabe der Komponenten bis zum Vorratsbehälter eine intensive Vermischung durch die eingeblasene Luft als Transportmittel. Die intensive Vermischung der Komponenten wird im Vorratsbehälter durch die eingeblasene Transportluft noch fortgesetzt.

Aus dem Vorratsbehälter wird das Holzpartikel-Kunststoff-Gemisch, z.B. nach Abwiegen auf einer Flächenwaage, auf ein erstes Transportband über seine Breite gleichmäßig aufgeblasen. Die Menge an zugeführten Holzpartikel-Kunststoff-Gemisch richtet sich nach der gewünschten Schichtdicke und der gewünschten Rohdichte des herzustellenden Vorvlieses. Typische Flächengewichte des gestreuten Vorvlieses können dabei in einem Bereich zwischen 2.500 und 10.000 g/m², bevorzugt zwischen 3.000 bis 7.000 g/m², besonders bevorzugt zwischen 3.000 bis 5.000 g/m², liegen. Wie bereits erwähnt wird die Breite des gestreuten Vorvlieses durch die Breite des ersten Transportbandes bestimmt, und kann z.B. in einem Bereich bis zu 3.000 mm, bevorzugt 2.800 mm, insbesondere bevorzugt bis zu 2.500 mm liegen.

Nach dem Aufbringen des Holzpartikel-Kunststoff-Gemisches auf ein erstes Transportband unter Ausbildung eines Vorvlieses wird das Vorvlies in mindestens einem ersten Temperofen zum Vorverdichten eingeführt. In einer besonders bevorzugten Ausführungsform des Verfahrens wird das Vorvlies aus Holzpartikeln und Kunststoff in dem mindestens einen Temperofen auf eine Temperatur erhitzt, die der Schmelztemperatur des verwendeten Kunststoffes entspricht oder darüber liegt.

Die Temperaturen im Temperofen können zwischen 150 und 250°C, bevorzugt 160 und 230°C, insbesondere bevorzugt 160 und 200°C liegen. Die Kerntemperatur des Vorvlieses liegt bevorzugt in einem Bereich zwischen 100 und 170°C, insbesondere bevorzugt bei ca. 150°C. Während des Erhitzens im Temperofen erfolgt ein Anschmelzen des Kunststoffmaterials, wodurch eine innige Verbindung zwischen dem Kunststoffmaterial wie z.B. den Kunststofffasern mit den Holzfasern hervorgerufen wird und gleichzeitig eine Verdichtung des Vorvlieses erfolgt. Dabei gilt, je höher die Kerntemperatur des Vorvlieses desto schneller kann die Presse gefahren werden, da der Verdichtungsprozess beschleunigt wird.

Die Temperaturen im Temperofen werden beispielsweise durch eingeblasene Heißluft erhalten.

In einer weiteren Ausführungsform des vorliegenden Verfahrens weist das vorverdichtete Vlies nach Austritt aus dem Temperofen eine Rohdichte (bzw. ein Raumgewicht) zwischen 40 und 350 kg/m³, bevorzugt 60 und 300 kg/m³, insbesondere bevorzugt zwischen 80 und 250 kg/m³ auf. Die Dicke des vorverdichteten Vorvlies kann dabei zwischen 20 und 100 mm, bevorzugt 30 und 50 mm, insbesondere bevorzugt 35 und 45 mm liegen.

Es ist insbesondere bevorzugt, wenn der Vorschub des Förderbandes bzw. Transportbandes im Temperofen in einem Bereich zwischen 5 und 15 m/min, bevorzugt zwischen 6 und 12 m/min liegt.

Nach dem Verlassen des Temperofens kann das vorverdichtete Vlies abgekühlt und konfektioniert werden. Typische Konfektionierungsmaßnahmen sind z.B. die Besäumung des Vlieses. Der dabei anfallende Abfall, insbesondere die anfallenden Randstreifen, können zerkleinert werden und in den Verfahrensprozess zurückgeführt werden. Da das gewünschte Mischungsverhältnis gegeben ist, kann das Material direkt in den Vorratsbehälter eingespeist werden.

In einer weiteren Variante des vorliegenden Verfahrens wird das vorverdichtete Vlies in der mindestens einen Doppelbandpresse auf eine Dicke zwischen 2 und 20 mm, bevorzugt 3 und 15 mm, insbesondere bevorzugt 4 und 10 mm verdichtet.

In einer weiteren Variante des vorliegenden Verfahrens kann auf die Pressbänder der Doppelbandpresse ein Trennmittel aufgetragen werden. Diese Maßnahme dient vor allem dazu, das Ankleben des vorverdichteten Vlieses an den Pressbändern zu verhindern. Vorzugsweise werden die Pressbänder der Doppelbandpresse kontinuierlich mit dem Trennmittel versehen. Als Trennmittel können Trennpapiere eingesetzt werden. Zum anderen werden z. B. siloxanhaltige Emulsionen verwendet.

Die während des Verdichtens des Vorvlieses in der mindestens einen Doppelbandpresse angelegte Temperatur liegt zwischen 150 und 250°C, bevorzugt 180 und 230°C, bevorzugt 200 und 220 °C. Der in der mindestens einen Doppelbandpresse angewendete Druck kann zwischen 2 MPa und 10 MPa, bevorzugt 3 MPa und 8 MPa, insbesondere bevorzugt 5 und 7 MPa liegen. Der Vorschub der Doppelbandpresse beträgt zwischen 4 und 15 m/min, bevorzugt zwischen 6 und 12 m/min.

Nach Verlassen der mindestens einen Doppelbandpresse wird die verdichtete Holzwerkstoffplatte in mindestens eine Kühlvorrichtung, wie zum Beispiel eine Kühlpresse eingeführt, in welcher ein Abkühlen der verdichteten Holzwerkstoffplatte auf Temperaturen zwischen 10 und 100 °C, bevorzugt 15 und 70 °C, insbesondere bevorzugt 20 und 40 °C erfolgt. Dabei wird in der mindestens einen Kühlpresse ein Druck angewendet, der identisch oder zumindest fast identisch ist zu dem Druck in der Doppelbandpresse, d.h. in der Kühlpresse herrscht ein Druck zwischen 2 MPa und 10 MPa, bevorzugt 3 MPa und 8 MPa, insbesondere bevorzugt 5 und 7 MPa.

Das Einführen der verdichteten Holzwerkstoffplatte in eine Kühlpresse ist notwendig, da die Rückstellkräfte der Fasern so groß sein können, dass die Platte ohne den Schritt des Kühlpressens nach dem Verdichten in der Doppelbandpresse wieder aufgehen würde.

Nach dem Verlassen der Kühlpresse weisen die verdichteten Holzwerkstoffplatten eine Dicke zwischen 2 und 15 mm, bevorzugt 3 und 12 mm, insbesondere bevorzugt 4 und 10 mm auf.

Die Rohdichte der verdichteten Holzwerkstoffplatten nach Verlassen der Kühlpresse liegt in einem Bereich zwischen 400 und 1200 kg/m³, bevorzugt zwischen 400 und 900 kg/m³, insbesondere bevorzugt zwischen 450 und 850 kg/m³.

Zur Herstellung einer Holzwerkstoffplatte mit einer Rohdichte von 850 kg/m³ wird z.B. vorteilhafterweise ein Pressdruck in der Doppelbandpresse (und auch Kühlpresse) von 4,5 bis 5 MPa (45-50 bar) bei einer Presstemperatur in der Doppelbandpresse des Vorlaufes von 235°C und einer Presstemperatur auf der Oberfläche der Platte von 220°C angelegt. Im Falle der Herstellung einer Holzwerkstoffplatte mit einer Rohdichte von 950 kg/m³ wird vorteilhafterweise ein Pressdruck in der Doppelbandpresse (und auch Kühlpresse) von 5,5 bis 6 MPa (55-60 bar) bei einer Presstemperatur in der Doppelbandpresse des Vorlaufes von 235 °C und einer Presstemperatur auf der Oberfläche der Platte von 220 °C angelegt.

In einer besonders bevorzugten Ausführungsform umfasst das Verfahren zur Herstellung der vorliegenden Holzwerkstoffplatte die folgenden Schritte:
- Bereitstellen von Holzfasern und eines mit mindestens einer organischen Verbindung funktionalisierten Kunststoffes;
- Bilden eines Gemisches aus den Holzfasern und den Kunststofffasern in einer Blasleitung;
- Zwischenpuffern bzw. Zwischenlagern des Gemisches in einem Speiser;
- Aufblasen des Gemisches auf eine erste Walze unter Ausbildung eines ersten Vorvlieses (Airlay);
- Zerfasern des ersten Vorvlieses und nochmaliges Aufblasen des Gemisches auf eine zweite Walze unter Ausbildung eines zweiten Vorvlieses (Airlay);
- Überführen des zweiten Vorvlieses auf ein Transportband und Einführen des zweiten Vorvlieses in den mindestens einen ersten Temperofen zum Vorverdichten durch Thermobonding zu einer Matte;
- Auftragen eines Isocyanat-Klebstoffs auf mindestens eine Seite des zweiten Vorvlieses,
- vollständiges Imprägnieren des vorverdichteten Vlieses mit dem Isocyanat-Klebstoff;
- Überführen der vorverdichteten Matte in die mindestens eine Doppelbandpresse zum weiteren Verdichten zu einer Trägerplatte, und
- optional Kühlen der Trägerplatte, insbesondere in einer Kühlzone der mindestens einen Presse.

Das Bereitstellen der Holzfasern und Kunststofffasern erfolgt üblicherweise in Form von Ballen, die in entsprechenden Ballenöffnern geöffnet werden. Nach den jeweiligen Ballenöffnern werden die Fasern in separaten Wiegeeinrichtungen abgewogen und in die Blasleitung eingegeben, in welcher auf dem Weg von der Zugabe der Fasern und ggf. weiteren Komponenten bis zum Vorratsbehälter bzw. Speiser eine intensive Vermischung durch die eingeblasene Luft als Transportmittel erfolgt. Aus dem Vorratsbehälter bzw. Speiser wird das Gemisch aus Holzfasern und Kunststofffasern nach Abwiegen auf einer Flächenwaage auf ein erstes Transportband mit erster Walze über seine Breite gleichmäßig unter Ausbildung eines ersten Vorvlieses aufgeblasen. Das erste Vorvlies läuft am Ende des ersten Transportbandes in eine Zerfaserungsvorrichtung ein. Das zerfaserte Gemisch wird auf ein zweites Transportband mit zweiter Walze unter Ausbildung eines zweiten Vorvlieses aufgeblasen.

Das so erhaltene Vorvlies (hier zweites Vorvlies) wird jetzt in den bereits oben beschriebenen Temperofen zum Vorverdichten unter Ausbildung des vorverdichteten Vorvlieses eingeführt, welches anschließend in die mindestens eine Doppelbandpresse zum weiteren Verdichten zu einer Holzwerkstoffplatte überführt wird.

Das im Wesentlichen vollständige, besonders bevorzugt das vollständige Imprägnieren des Vorvlieses mit dem Isocyanat-Klebstoff erfolgt üblicherweise durch Anlegen eines Vakuums oder eines Unterdruckes, beispielsweise mittels einer Saugvorrichtung, an der Unterseite des Vorvlieses, nach und/oder während des Auftragens des Isocyanat-Klebstoffs auf die Oberseite des Vorvlieses.

Die mit dem vorliegenden Verfahren hergestellten Holzwerkstoffplatten bzw. Holz-Kunststoff-Komposite (WPC) sind durch eine Quellung von weniger als 5%, bevorzugt weniger als 3%, insbesondere bevorzugt weniger als 1% charakterisiert.

In einer weiteren Ausführungsform des vorliegenden Verfahrens hat es sich als vorteilhaft erwiesen, dem Holzpartikel-Kunststoff-Gemisch vor dem Verdichten weitere Substanzen wie Füllstoffe oder Additive zuzugeben, die der Holzwerkstoffplatte spezielle Eigenschaften verleihen.

Als geeignete Additive können Flammenschutzmittel, lumineszierende oder antibakterielle Stoffe dem Holzpartikel-Kunststoff-Gemisch zugegeben werden. Geeignete Flammschutzmittel können ausgewählt sein aus der Gruppe enthaltend Phosphate, Borate, insbesondere Ammoniumpolyphosphat, Tris(tri-bromneopentyl)phospat, Zinkborat oder Borsäurekomplexe von mehrwertigen Alkoholen.

Weitere Additive können die UV-Beständigkeit, das Alterungsverhalten oder die elektrische Leitfähigkeit der Holzwerkstoffplatte beeinflussen. Zur Erhöhung der UV-Beständigkeit ist es z.B. bekannt, Kunststoffen sogenannte UV-stabilisierende Verbindungen wie die sogenannten HALS-Verbindungen zuzusetzen. Als Antifungizide und antibakterielle Mittel können u.a. Polyimine verwendet werden.

Auch ist es vorteilhaft, dem Holzpartikel-Kunststoff-Gemisch einen anorganischen Füllstoff zuzugeben. Als anorganischer Füllstoff können z.B. Materialien wie Talkum, Kreide, Titandioxid oder andere verwendet werden, die der Platte eine spezifische Färbung verleihen.

Wie oben ausgeführt, ist die vorliegende Holzwerkstoffplatte auf mindestens einer Seite, bevorzugt auf der Oberseite, mit mindestens einer Dekorschicht versehen.

Die mindestens eine Dekorschicht kann in verschiedener Form und Weise ausgeführt bzw. aufgebaut sein.

So kann die Holzwerkstoffplatte in einer ersten Ausführungsform eine Dekorschicht aufweisen, die mindestens eine Dekorfolie umfasst. Eine solche Dekorfolie besteht aus mindestens einer thermoplastischen Tragschicht, aus mindestens einem auf der Tragschicht aufgedruckten Dekor oder mindestens einer separaten Dekorlage und mindestens einer Kunststoffversiegelung.

Wie erwähnt, bestehen Dekorfolien typischerweise aus einer oder mehrerer Lagen aus einem thermoplastischen Material als Tragschicht, insbesondere Polyethylen, Polypropylen oder Polyurethan. Das Dekor kann auf diese Tragschicht direkt aufgedruckt werden oder als separate Dekorlage auf der Tragschicht vorgesehen sein. Das Dekor wird wiederum mit einer Kunststoffversiegelung z.B. in Form einer Polypropylen-Folie, Polyurethan-Folie oder in Form eines separaten Lackes (z.B. ESH-Lack) versehen, wobei die Kunststoffversiegelung als Verschleißschutzschicht mit den entsprechenden verschleißhemmenden Partikeln (siehe hierzu auch weiter unten) versehen sein kann. Bei der Dekorfolien handelt es sich somit um ein Lagenpaket aus Tragschicht, Dekor und Versiegelung, die selbst ein fertiges Laminat bzw. einen fertigen Verbund bilden, der als Dekorschicht einsetzbar ist.

Eine derartige Dekorfolie kann bevorzugt auf die Holzwerkstoffplatte unter Verwendung von mindestens einem Kleber aufkaschiert werden, oder während des Herstellungsprozesses der Holzwerkstoffplatte, insbesondere während des Verdichtens des Holzfaservlieses zur Holzwerkstoffplatte, auf die selbige aufgepresst werden.

In einer weiteren Ausführungsform kann die Holzwerkstoffplatte eine Dekorschicht in Form einer dekorativen Finish-Folie aufweisen. Eine dekorative Finish-Folie besteht aus einem aminoharzgefüllten dekorativen Papier und mindestens einer darauf vorgesehenen Lackschicht. Das dekorative Papier ist entweder mit dem entsprechenden Aminoharz (z.B. Melamin-Formaldehyd-Harz oder Harnstoff-Formaldehyd-Harz) imprägniert.

Die Finish-Folie wird bevorzugt auf die Holzwerkstoffplatte unter Verwendung von mindestens einem Kleber aufkaschiert.

Die dekorative Finish-Folie kann nach dem Aufkaschieren auf die Holzwerkstoffplatte mit mindestens einer weiteren Lackschicht, bevorzugt zwei oder drei Lackschichten, aus einem UV-härtbaren und/oder einem Elektronenstrahlhärtbaren (ESH)-Lack versehen werden.

Als UV-härtbare und/oder Elektronenstrahl(ESH)-härtbare Lacke sind insbesondere strahlenhärtbare, acrylathaltige Lacke einsetzbar. Typischerweise enthalten die verwendeten strahlenhärtbaren Lacke Methacrylate, wie z.B. Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure, Acrylether und/oder Acrylsäureester-Monomeren, -Oligomeren oder -Polymeren enthält.

Der UV-härtbare Lack und/oder Elektronenstrahl (ESH)-härtbare Lack kann abriebfeste Partikel, natürliche und/oder synthetische Fasern und auch weitere Additive enthalten. Die im UV-Lack enthaltenen abriebfesten bzw. verschleißhemmenden Partikel sind insbesondere ausgewählt aus der Gruppe enthaltend Aluminiumoxide (z. B. Korund), Borcarbide, Siliziumdioxide (z. B. Glaskugeln), Siliziumcarbide.

Es können auch natürliche oder synthetische Fasern, ausgewählt aus der Gruppe enthaltend Holzfasern, Zellulosefasern, partiell gebleichte Zellulosefasern, Wollfasern, Hanffasern und organische oder anorganische Polymerfasern, dem UV-und/oder ESH-Lack zugefügt werden. Als weitere Additive können Flammschutzmittel und/oder lumineszierende Stoffe zugegeben werden. Geeignete Flammschutzmittel können ausgewählt sein aus der Gruppe enthaltend Phosphate, Borate, insbesondere Ammoniumpolyphosphat, Tris(tribromneopentyl)phosphat, Zinkborat oder Borsäurekomplexe von mehrwertigen Alkoholen. Als lumineszierende Stoffe können fluoreszierende oder phosphoreszierende Stoffen, insbesondere Zinksulfit und Alkalialuminate zum Einsatz kommen.

In einer Ausführungsform sind bevorzugterweise mehr als eine strahlenhärtbare Schutzschicht, bevorzugt zwei oder drei Schutz- bzw. Verschleißschichten, vorgesehen, die jeweils aufeinander angeordnet oder aufgetragen werden. So ist es z.B. möglich, zunächst eine erste Lage eines UV-härtbaren Lackes gefolgt von einer zweiten Lage eines ESH-Lackes und wiederum gefolgt von einer dritten Lage eines ESH-Decklackes aufzutragen. Die einzelnen Lackschichten können jeweils abriebfeste und/oder Nanopartikel enthalten, wobei es insbesondere wünschenswert ist, wenn der UV-Lack verschleißhemmende Partikel (wie z.B. Korund) und der ESH-Decklack Partikel zur Steigerung der Mikrokratzfestigkeit (wie z.B. Silikatnanopartikel aus pyrogener Kieselsäure) umfasst.

In einer besonders bevorzugten Ausführungsform umfasst die Verschleißschicht eine erste Lage eines Korund-enthaltenen UV-Lack, der mittels UV-Trockner angeliert wird, eine zweite Lacke eines ESH-Lackes als elastischen Zwischenlack und eine dritte Lage eines ESH-Decklacke mit Nanopartikeln.

Die Lackschichten werden zunächst angehärtet, insbesondere unter Verwendung eines Eximerstrahlers zum Zwecke der Mattierung durch Mikrofaltung der Lackoberfläche, und abschließend wird der gesamte Lackaufbau endgehärtet bzw. durchgehärtet, insbesondere unter Verwendung eines ESH-Strahlers.

In solchen Fällen kann die Auftragsmenge für jede einzelne Schutzschicht bzw. Lage einer Schutzschicht zwischen 10 g/m² und 100 g/m², bevorzugt 20 g/m² und 80 g/m², insbesondere bevorzugt zwischen 30 und 50 g/m² variieren oder gleich sein. Die Gesamtauftragsmenge kann in Abhängigkeit von der Anzahl der Lagen zwischen 30 g/m² und 150 g/m², bevorzugt 50 g/m² und 120 g/m² variieren.

Auch kann die mindestens eine Verschleißschutzschicht chemische Vernetzer enthalten, z.B. auf Basis von Isocyanaten, wodurch die Zwischenhaftung der einzelnen übereinander angeordneten Verschleißschutzschichten erhöht wird.

Die in den strahlenhärtbaren Lacken verwendeten Acrylatverbindungen sind aufgrund ihrer Reaktivität in der Lage, sich an die in dem Lack vorliegenden Fasern, abriebfesten Partikel oder Additive anzulagern bzw. diese zu umhüllen. Während des weiteren Verarbeitens der Holzwerkstoffplatten kommt es zu einer chemischen Vernetzung der reaktiven Doppelbindung der Acrylatverbindungen und somit zu einer Ausbildung einer Polymerschicht auf den Fasern, Partikeln, Farbpigmenten oder Additiven, die einem Ausbleichen entgegenwirkt.

Wie erwähnt können die Dekorfolie und die dekorative Finish-Folie als Dekorschicht auf die Holzwerkstoffplatte aufkaschiert werden, z.B. in einer Kaschierpresse. Im Falle einer Kaschierung auf die Holzwerkstoffplatte, insbesondere die Oberseite der Holzwerkstoffplatte, wird zunächst ein geeignetes Bindemittel, wie z.B. ein Polyvinylacetat (PVAc)- Leim, Harnstoffleim oder PU-Hotmelt, auf die Oberseite aufgetragen. Die notwendigen (flüssigen) Bindemittelmengen liegen zwischen 20 und 50 g/m², bevorzugt 30 und 40 g/m². Im Falle der Verwendung von PU-Hotmelt betragen die Auftragsmengen zwischen 50 und 150 g/m², bevorzugt zwischen 80 und 150 g/m² oder 70 und 100 g/m². Der Vorschub der Kaschierlinie beträgt zwischen 10 und 50 m/min, bevorzugt 20 und 30 m/min. Aufgrund der in der Kaschierpresse herrschenden hohen Temperaturen erfolgt im Falle der Finish-Folie eine Restaushärtung des Harzimprägnates des dekorativen Papiers der Finish-Folie.
In einer noch weiteren Ausführungsform der vorliegenden Holzwerkstoffplatte kann die mindestens eine Dekorschicht mindestens eine aminoharzimprägnierte Dekorpapierlage und gegebenenfalls mindestens eine aminoharzimprägnierte Overlaypapierlage umfassen, wobei die Dekorpapierlage und gegebenenfalls die Overlaypapierlage mit der Holzwerkstoffplatte verpresst werden.

Dekorpapiere bzw. Dekorpapierlagen wiederum sind einlagige Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein. Vorzugsweise werden Dekorpapiere mit einer Imprägnierung, wie beispielsweise einer wärmehärtbaren Kunstharzimprägnierung, versehen.

Häufig wird das Dekorpapier zusammen mit einer Verschleißschicht (Overlaypapierlage) als eine einzelne Schicht geliefert. Als Overlay werden dünne Papiere verwendet, welche typischerweise bereits mit einem Melaminharz getränkt wurden Es sind ebenfalls Overlays erhältlich, in denen bereits abriebfeste Partikel, wie zum Beispiel abriebfeste Partikel vorzugsweise ausgewählt aus der Gruppe enthaltend Aluminiumoxide, Borcarbide, Siliziumdioxide, Siliziumcarbide und Glaspartikel, in das Harz des Overlays eingemischt sind, um die Abriebfestigkeit des Laminats bzw. der Holzwerkstoffplatte zu erhöhen.

In einer anderen Variante wird die mindestens eine Dekorpapierlage nach Aufbringen auf die Oberseite der Holzwerkstoffplatte unter Einwirkung von Druck und Temperatur (z.B. in einer Kurztaktpresse) verpresst (z.B. unter Ausbildung eines Laminats).

In einer weiteren Ausführungsform kann auf die Unterseite der Holz-Kunststoff-Verbundwerkstoff-Platte ein Gegenzug aufgebracht werden. Dadurch werden insbesondere die, durch die auf der Oberseite der Holz-Kunststoff-Verbundwerkstoff-Platte aufgebrachten Dekor- und Overlaylagen wirkenden Zugkräfte ausgeglichen. In einer bevorzugten Ausführungsform wird der Gegenzug als Zelluloselage ausgeführt, die imprägniert ist. Beispielsweise kann der Gegenzug als ein mit einem wärmehärtbaren Kunstharz imprägniertes Papier ausgeführt sein. In einer besonders bevorzugten Ausführungsform entspricht der Schichtaufbau des Gegenzugs dem Schichtaufbau und der jeweiligen Schichtdicke genau der auf der Oberseite aufgebrachten Schichtfolge aus Dekor- und Overlaylagen.

In einer bevorzugten Ausführungsform werden die Dekorpapier- und/oder Overlaypapierlagen und der Gegenzug mit der großformatigen Holz-Kunststoff-Verbundwerkstoff-Platte in einem Arbeitsschritt unter Wirkung von Temperatur und Druck in einer Kurztaktpresse zu einem Laminat verpresst.

Übliche Kurztakt-Pressen arbeiten beispielsweise bei einem Druck von 30 bis 60 kg/cm², einer Temperatur an der Holzwerkstoffoberfläche von etwa 165 - 175 °C und einer Presszeit von 6 bis 12 Sekunden.

Bei Verwendung der Holz-Kunststoff-Verbundwerkstoff-Platten gemäß der Erfindung als Trägermaterialen arbeiten die Kurztaktpressen vorzugsweise bei 30 °C bis 40 °C niedrigeren Temperaturen als bei der Herstellung von Laminaten auf Basis von herkömmlichen Holzfaserplatten. In einer besonders bevorzugten Ausführungsform arbeiten die Kurztaktpressen bei Verwendung der Holz-Kunststoff-Verbundwerkstoff-Platten gemäß der Erfindung bei einer Temperatur von 140°C bis 160°C, an der Plattenoberfläche, ganz besonders bevorzugt bei 150°C an der Plattenoberfläche.

Die Presszeit der Kurztaktpresse liegt bei Verwendung der Holz-Kunststoff-Verbundwerkstoff-Platten gemäß der Erfindung bei 5 bis 15 s, vorzugsweise bei 7 bis 12 s, besonders bevorzugt bei kleiner oder gleich 10 s, wie beispielsweise 9, 8, 7 oder 6 Sekunden.

Wenn bei der Herstellung von Laminaten auf Basis von Holz-Kunststoff-Verbundwerkstoffen Presszeiten größer als 10 s gewählt werden, muss eine Kühlung erfolgen, damit das weitere Handling der Holz-Kunststoff-Verbundwerkstoff-Platten ermöglicht wird. Dies kann beispielsweise durch Kühlung der Platten unmittelbar am Auslauf der Presse mittels vorgekühlter Luft erfolgen. Eine weitere Möglichkeit ist das Kühlen mittels gekühlter Walzen oder in einer dafür ausgerüsteten Presse (Kühlzone).

Wie oben bereits angedeutet, ist es in einer weiteren Variante des vorliegenden Verfahrens auch möglich und sinnvoll, die mindestens eine Dekorschicht, insbesondere in Form einer Finish-Folie oder aminoharzimprägnierten Dekorpapierlage, bereits während des Herstellungsprozesses auf die Oberseite des vorverdichteten Vorvlieses aufzutragen. Mit anderen Worten die mindestens eine Finish-Folie wird hier beim Überführen des vorverdichteten Vorvlieses aus dem ersten Temperofen in die mindestens eine Doppelbandpresse zum Zwecke des weiteren Verdichtens simultan auf die Oberseite des Vorvlieses aufgetragen, so dass in der Folge das vorverdichtete Vorvlies zusammen mit der mindestens einen Finish-Folie (in der Doppelbandpresse) weiter verdichtet wird. Das Aufbringen der Finish-Folie kann auf einfache Art und Weise durch Zuführung der Finish-Folie zu der mindestens einen Doppelbandpresse mittels einer Abwickelvorrichtung erfolgen.

Es ist auch vorstellbar, dass mindestens eine Trennlage oberhalb der Finish-Folie während des Überführens des vorverdichteten Vorvlieses in die mindestens eine Doppelbandpresse simultan aufgebracht wird.

Gemäß einer weiteren Ausgestaltung kann es auch vorgesehen sein, dass die Holzwerkstoffplatte in Form eines WPC zumindest in einem Randbereich der Platte eine Profilierung aufweist, wobei das Profil beispielsweise die Einbringung eines Nut- und/oder Federprofils in eine Kante bzw. Seitenfläche der Holzwerkstoffplatte ermöglicht, wobei die so erhaltenen Paneele bzw. Holzwerkstoffplatten miteinander verbunden werden können und eine schwimmende Verlegung und Abdeckung eines Bodens ermöglichen.

Mittels des vorliegenden Verfahrens ist es nunmehr möglich eine Holzwerkstoffplatte, insbesondere ein Holz-Kunststoff-Verbundwerkstoff, herzustellen, welche ein Gemisch aus Holzpartikeln und mindestens einen Kunststoff, insbesondere einem mit einer organischen Verbindung funktionalisierten Kunststoff umfasst, wobei die mindestens eine organischen Verbindung über mindestens eine funktionellen Gruppe zur Ausbildung einer Bindung mit den OH-Gruppen der Zellulose, der Hemicellulose oder des Lignins der Holzpartikel aufweist. Wegen des hohen Kunststoffgehaltes besitzt die vorliegende Holzwerkstoffplatte eine deutlich reduzierte Quellung im Vergleich zu Standard-HDF-Platten oder auch quellreduzierten HDF-Platten. Diese erreichen im beschichteten Zustand bei dem Kantenquelltest gemäß der DIN EN 13329 bei hoher Melaminverstärkung des verwendeten Leims, Kantenquellwerte um ca. 7%. Die vorliegende Faserplatte oder WPC erreicht in beschichtetem Zustand Kantenquellungen von < 3,5%.

Die vorliegende Holzwerkstoffplatte weist eine Vielzahl von Vorteilen auf: Beibehaltung der guten mechanischen Eigenschaften, Standardtechnologien sind nutzbar, wie beispielsweise Kaschieren mit bekannten Kaschierpressen und/oder Lackieren mit bekannten Lackierstraßen, großformatige Platte kann optimal verarbeitet werden, sehr niedrige Quellung der Trägerplatte und des fertigen Fußbodens.

Die vorliegende Holzwerkstoffplatte, insbesondere die mit entsprechenden Dekoren und Verschleißschichten versehenen Holz-Kunststoff-Verbundwerkstoff-Platten, können als Beläge für Wand, Boden oder Decken oder für Möbel eingesetzt werden. Das bevorzugte Anwendungsgebiet ist der Bereich des Bodenbelags und Laminatboden.

Die Erfindung wird nachfolgend unter Bezugnahme auf die Figuren der Zeichnung an mehreren Ausführungsbeispielen näher erläutert. Es zeigt:
- Figur 1: eine schematische Darstellung einer ersten Ausführungsform des vorliegenden Verfahrens, und
- Figur 2: eine schematische Darstellung einer zweiten Ausführungsform des vorliegenden Verfahrens.

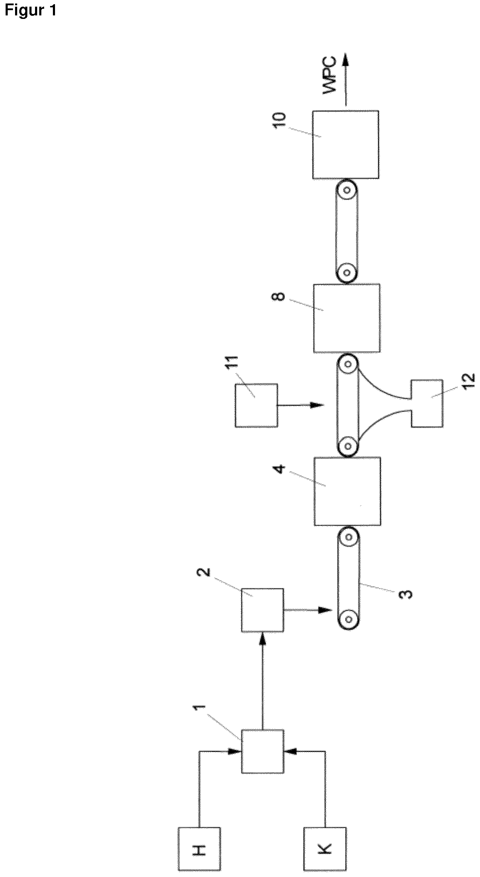

Das in Figur 1 gezeigte Verfahrensschema umfasst eine Mischvorrichtung 1, in welche Holzfasern H und Kunststoff K, z.B. mit Maleinsäureanhydrid funktionalisierte Biko-Fasern eingebracht werden. Die Mischvorrichtung 1 kann z.B. in Form einer Blasleitung vorliegen, in welcher durch die eingeblasene Luft eine intensive Vermischung der Holzfasern und der funktionalisierten Biko-Fasern erfolgt.

Aus der Mischvorrichtung 1 gelangt das Fasergemisch in eine Streuvorrichtung 2, aus welcher das Fasergemisch mechanisch ausgetragen wird und unter Bildung eines Vorvlieses auf ein Transportband 3 gestreut wird. Die Streuvorrichtung 2 kann z.B. in Form eines Walzenstreukopfes ausgebildet sein. Unterhalb des Transportbandes kann eine Waage z.B. in Form einer Bandwaage angeordnet sein, welche kontinuierlich das Gewicht des Vorvlieses ermittelt.

Das Transportband 3 führt das Vorvlies in einen Temperofen 4 z.B. in Form eines Durchströmungsofens mit einem Vorschub von bis zu 15 m/min ein. Im Temperofen erfolgt bei

Temperaturen von bis zu 200°C ein Vorverdichten des Vorvlieses, wobei die Biko-Fasern angeschmolzen werden und eine Verbindung der Biko-Fasern mit den Holzfasern bewirkt wird. Die Dicke des den Temperofen verlassenen Vorvlieses kann zwischen 20 und 100 mm betragen.

Nach Verlassen des Temperofens 4 wird mittels einer Auftragvorrichtung 11, beispielsweise einer Sprühvorrichtung, auf das vorverdichtete Vlies ein Isocyanat-Klebstoff aufgetragen. Zur Unterstützung der Penetration des Isocyanat-Klebstoffs in das vorverdichtete Vlies wird mittels der Vorrichtung 12 ein Unterdruck erzeugt.

Danach wird das mit dem Isocyanat-Klebstoff behandelte vorverdichtete Vlies unmittelbar in eine Doppelbandpresse 8 mit einem Vorschub von bis zu 12 m/min eingeführt. In der Doppelbandpresse 8 erfolgt die weitere Verdichtung des Vlieses bzw. Vorvlieses bei einem Druck von z.B. 3 MPa und einer Temperatur von z.B. 220 °C auf eine Dicke zwischen 2 und 15 mm.

Nach dem Anschmelzen der Biko-Fasern muss der Verdichtungszustand der die Doppelbandpresse 8 verlassene Platte so lange konstant gehalten werden, bis die Biko-Fasern soweit abgekühlt sind, dass die Erweichungstemperatur der selbigen sicher unterschritten ist, um ein "Aufgehen" der verdichteten Platte bedingt durch die Rückstellkräfte der Biko-Fasern zu verhindern. Hierzu wird die die Doppelbandpresse 8 verlassende verdichtete Platte unmittelbar in eine Kühlpresse 10 eingeführt, in welcher eine Abkühlung der verdichteten Platte auf Temperaturen zwischen 15 und 40°C erfolgt. Die Kühlung der Kühlpresse kann z.B. mittels Wasserkühlung erfolgen. Heiz- und Kühlsegment können auch gemeinsam in die Doppelbandpresse 8 integriert sein und über ein gemeinsames Transportband miteinander verbunden sein.

Nach Verlassen der Kühlpresse 10 weist die verdichtete (WPC) Platte eine Dicke zwischen 2 und 12 mm und eine Rohdichte von z.B. 800 bis 1100 kg/m³ auf. Die WPC-Platte kann anschließend beliebig weiterverarbeitet (z.B. Aufbringen von Dekorschichten) und konfektioniert werden.

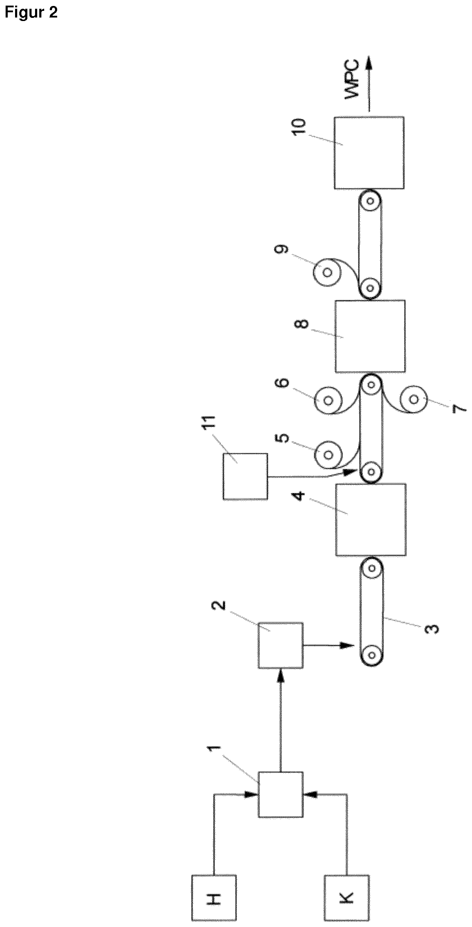

Das in Figur 2 gezeigte Verfahrensschema unterscheidet sich von dem Schema der Figur 1 dahin gehend, dass nach Verlassen des Temperofens 4 und nach dem Auftragen des Isocyanat-Klebstoffs mittels der Auftragvorrichtung 11 das vorverdichtete Vorvlies unmittelbar in eine Doppelbandpresse 8 mit einem Vorschub von bis zu 12 m/min eingeführt wird, wobei gleichzeitig mittels der Abwickelvorrichtung 5 eine dekorative Finishfolie auf die Oberseite des Vorvlieses und mittels der Abwickelvorrichtung 7 ein Gegenzugpapier auf die Unterseite des Vorvlieses aufgetragen werden. Wahlweise kann nach Auftragen der dekorativen Finish-Folie mit der Abwickelvorrichtung 5 noch ein Trennpapier oder eine Trennfolie aufgetragen werden mit der Abwickelvorrichtung 6, das oder die nach Verlassen der Doppelbandpresse 8 mit der Vorrichtung 9 wieder aufgewickelt wird In der Doppelbandpresse 8 erfolgt die weitere Verdichtung des Vlieses bzw. Vorvlieses bei einem Druck von z.B. 3 MPa und einer Temperatur von z.B. 160 °C auf eine Dicke zwischen 2 und 15 mm, beispielsweise auf 4,5 mm.

Mit den hierin beschriebenen Verfahren können Platten in Stärken von 3 bis 10 mm produziert werden. Dabei kann das Gemisch aus Holzfasern und/oder Holzspänen mit Kunststoffasern und/oder Kunststoffpartikeln in einem Mischungsverhältnis von 90:10 bis 40:60 variieren. Die Regel laut dabei, dass 10 % Kunststofffasern durch 2 - 3 Gew.% Isocyanat-Klebstoff, wie beispielsweise PMDI oder PU-Präpolymer, substituiert werden können. Es können mit diesem Verfahren Platten mit Rohdichten zwischen 500 und 1200 kg/m³ hergestellt werden.

Das Verfahren benötigt nach Durchlaufen der Doppelbandpresse gegebenenfalls optional eine spezielle Rückkühlung der Platten. Bei einem niedrigen Substitutionsgrad von Kunststofffasern durch PMDI oder PU-Präpolymer kann nach dem Heißpressen der Einsatz einer Kühlpresse notwendig sein.

Zur Steigerung der Effizienz der Saug- oder Pressvorrichtung in der Imprägnierstation können im Kantenbereich des Faserkuchens Abdichtungen vorgesehen sein, die neben der Vermeidung des Druckverlustes bzw. des Zutrittes von Falschluft, auch das Austreten des PMDI oder Präpolymeren aus dem Rand des Faserkuchens verhindern sollen. Eine einfache Konstruktion mit Blechen, die entlang des Faserkuchens eingebaut werden, hat sich dabei bewährt.

Durch die Verwendung der Kombination aus Kunststofffasern und PMDI oder Präpolymeren können nicht nur Kosten eingespart werden, sondern die Produkte können für die verschiedenen Einsatzbereiche maßgeschneidert werden. Für den Außenbereich können Produkte mit einem höheren Anteil an Kunststofffasern hergestellt werden, da dort neben der Quellung auch die Witterungsbeständigkeit eine große Rolle spielt. Im Innenbereich für Fußbodenanwendungen ist eher die Quellreduzierung in Kombination mit einer Elastifizierung des Trägers wichtig. Damit würde im ersten Fall eine Platte mit einem hohen Kunststoffaser-Anteil / einem niedrigen PMDI-Anteil und im zweiten Fall eine Platte mit einem niedrigeren Kunststoff-Anteil / einem höheren pMDI-Anteil produziert werden.

### Ausführungsbeispiel 1a: Herstellung einer ersten WPC-Trägerplatte

Aus Ballenöffnern wurden Holzfasern (44 Gew.%) und ein Gemisch aus BiCo-Fasern (55 Gew.%, Polyethylenterephthalat/ Polyethylenterephthalat-Coisophtalat) und 1 Gew% LLDPE-Fasern gegraftet mit Maleinsäureanhydrid bereitgestellt und einer Blasleitung als Mischvorrichtung unter Ausbildung eines Holzfaser-Kunststofffaser-Gemisches zugeführt. Das Holzfaser-Kunststofffaser-Gemisch wird in einem Speiser zwischengepuffert.

Anschließend wird das Holzfaser-Kunststofffaser-Gemisch auf eine erste Walze zur Ausbildung eines ersten Vorvlieses (Airlay) aufgeblasen, das erste Vorvlies wird zerfasert und das zerfaserte Gemisch wird nochmalig auf eine weitere zweite Walze unter Ausbildung eines zweiten Vorvlieses (Airlay) aufgeblasen.

Das zweite Vorvlies (Flächengewicht: 4.200g/m²) wird auf ein Förderband in einer Breite von 2.800 mm abgelegt. Der Vorschub des Förderbands lag bei ca. 6 m/min.

Das Vorvlies wurde in einem Durchströmungsofen bei Temperaturen von bis zu 160°C auf eine Stärke von 35 mm zu einem Vlies bzw. einer Matte durch Thermobonding vorverdichtet. Dabei erreichte das Vlies eine Kerntemperatur von ca. 130 °C.

Hinter dem Durchströmungsofen lief das vorverdichtete Vlies in eine Behandlungsstation, in der über Walzen ca. 200 g PMDI / m² (ca. 6 Gew.% pro Platte) aufgetragen wurden. Unter dem Faserkuchen befand sich eine Saugvorrichtung, die durch einen anliegenden Unterdruck die Penetration des PMDI in den Faserkuchen beschleunigte und überschüssiges PMDI aufnehmen konnte.

Die Matte (Format: 2650 x 2150 mm, Dicke: 35 mm, Flächengewicht: 4.400 g/m²) wird in einer Doppelbandpresse bei ca. 220°C und 50 bar auf etwa 4 mm verdichtet. Anschließend wird das zu einer Platte verdichtete Vlies in einer Durchlaufpresse mit Kühlung auf ca. 50 °C abgekühlt. Die Platten werden besäumt (Format: 2600 x 2070 mm; Dicke beträgt etwa 4 mm) und geschliffen.

### Ausführungsbeispiel 1b: Herstellung einer zweiten WPC-Trägerplatte

Ein Fasergemisch aus 28 % PP/PE-BiCo-Fasern (mit Maleinsäureanhydrid gegrafted) und 72 % Holzfasern wurden in einer Mischvorrichtung gemischt und anschließend in einer Streuvorrichtung auf ein Transportband aufgestreut. Die gestreute Menge lag bei ca. 3200 g/m². Das Transportband förderte den Faserkuchen durch einen Thermobondingofen, wobei eine Durchwärmung auf bis zu 150°C und eine Verdichtung auf ca. 35 mm erfolgte. Der Vorschub lag bei ca. 6 m/min. Hinter dem Thermobondingofen lief der Faserkuchen in eine Behandlungsstation, in der über Walzen ca. 200 g PMDI / m² (ca. 6 Gew.% pro Platte) aufgetragen wurden. Unter dem Faserkuchen befand sich eine Saugvorrichtung, die durch einen anliegenden Unterdruck die Penetration des PMDI in den Faserkuchen beschleunigte und überschüssiges PMDI aufnahm. Der vorverdichtete und imprägnierte Faserkuchen wurde dann weiter in eine Doppelbandpresse gefördert und auf eine Stärke von 4 mm verdichtet (Pressparameter analog Ausführungsbeispiel 1a). Die Pressbänder der Conti-Presse wurden kontinuierlich mit einem Trennmittel beaufschlagt, das das Ankleben des Faserkuchens verhindern sollte. Hinter der Presse wurde der Endlosstrang getrennt und die Einzelformate in einer Kühlvorrichtung abgekühlt.

Zum Vergleich wurde eine Platte mit 56 Gew.% PP/PE-BiCo-Fasern (mit Maleinsäureanhydrid gegraftet) und 44 Gew.% Holzfasern produziert, ohne das eine Applikation von PMDI erfolgte (Verfahrensparameter analog Ausführungsbeispiel 1b).
Die Platten wurden anschließend auf einer Kaschierlinie mit einer dekorativen PP-Folie auf der Oberseite und einem wasserdichten Gegenzug auf der Unterseite kaschiert. An den Proben wurde eine Kantenquellung gemäß der DIN EN 16511 durchgeführt

| **Prüfung** | **Trägerplatte 1b** 26,3 Gew.% PP/PE-Bico-Fasern, 67,7 Gew. % Holzfasern, 6 Gew. % pMDI | **Trägerplatte Vergleichsmuster 1b** 56 Gew.% PP/PE-Bico-Fasern 44 Gew. % Holzfasern |
|---|---|---|
| Kantenquellung gemäß DIN EN 16511 (24h) in % | 1,51 | 1,45 |

### Ausführungsbeispiel 1c: Herstellung einer dritten WPC-Trägerplatte

Ein Fasergemisch aus 38 % PP/PE-BiCo-Fasern (mit Maleinsäureanhydrid gegrafted) und 62 % Holzfasern wurden in einer Mischvorrichtung gemischt und anschließend in einer Streuvorrichtung auf ein Transportband aufgestreut. Die gestreute Menge lag bei ca. 4800 g/m². Das Transportband förderte den Faserkuchen durch einen Thermobonding-Ofen, wobei eine Durchwärmung auf bis zu 150 °C und eine Verdichtung auf ca. 35 mm erfolgte. Der Vorschub lag bei ca. 4 m/min. Hinter dem Thermobondingofen lief der Faserkuchen in eine Behandlungsstation, in der über eine Sprühvorrichtung ca. 200 g PU-Präpolymer / m² (ca. 4 Gew.% auf Platte, Hersteller Fa. Jowat, Produkt 687.00) aufgetragen wurden. Unter dem Faserkuchen befand sich eine Saugvorrichtung, die durch einen anliegenden Unterdruck die Penetration des PU-Präpolymers in den Faserkuchen beschleunigte und überschüssiges PU-Präpolymer aufnahm. Der vorverdichtete und imprägnierte Faserkuchen wurde dann weiter in eine Doppelbandpresse gefördert und auf eine Stärke von 6 mm verdichtet. Die Pressbänder der Conti-Presse wurden kontinuierlich mit einem Trennmittel beaufschlagt, das das Ankleben des Faserkuchens verhindern sollte. Hinter der Presse wurde der Endlosstrang getrennt und die Einzelformate in einer Kühlvorrichtung abgekühlt.

Zum Vergleich wurde eine Platte mit 56 Gew.% PP/PE-BiCo-Fasern (mit Maleinsäureanhydrid gegraftet) und 44 Gew.% Holzfasern produziert, ohne das eine Applikation von PU-Präpolymer erfolgte (Verfahrensparameter analog Ausführungsbeispiel 1c).

Die Platten wurden anschließend auf einer Kaschierlinie mit einer dekorativen PP-Folie auf der Oberseite und einem wasserdichten Gegenzug auf der Unterseite kaschiert. An den Proben wurde eine Kantenquellung gemäß der DIN EN 16511 durchgeführt.

| **Prüfung** | **Trägerplatte 1c** 36,5 Gew.% PP/PE-Bico-Fasern, 59,5 Gew. % Holzfasern, 4 Gew. % PU-Präpolymer | **Trägerplatte Vergleichsmuster 1c** 56 Gew.% PP/PE-Bico-Fasern 44 Gew. % Holzfasern |
|---|---|---|
| Kantenquellung gemäß DIN EN 16511 (24h) in % | 1,21 | 1,35 |

### Ausführungsbeispiel 2: WPC mit aufkaschierter dekorativer Folie

Die WPC-Formate des Ausführungsbeispiels 1a wurden nach Abkühlung auf der Oberseite mit einer dekorativen Polypropylenfolie für Fussboden-Anwendungen und auf der Rückseite mit einem Gegenzug auf Basis eines geleimten Papiers beklebt. Die Verklebung erfolgt mit einem PU-Hotmelt. Die Auftragsmengen des Klebers liegen auf der Oberseite bei 100 g/m² und auf der Unterseite bei 50 g/m².

Aus den oben genannten Formaten wurden Fußbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt.

### Ausführungsbeispiel 3: WPC mit aufkaschierter dekorativer Papierlaae (Finishfolie), die abriebfest mit Lack versiegelt ist

Die in Ausführungsbeispiel 1b hergestellte WPC-Trägerplatte wird in einer Kaschierpresse mit einem dekorativen, harzgefüllten und in der Oberfläche lackierten Papier beschichtet. Auf der Unterseite wird ein Gegenzug (Papier) aufkaschiert. Für die Kaschierung wird ein PVAc-Leim eingesetzt, der beidseitig in einer Menge von etwa 130 g/m² flüssig aufgetragen wird. Der Vorschub an der Kaschierlinie beträgt etwa 20 m/min. Die Temperatur im Thermoöl liegt bei etwa 200 °C.

Die dekorierte Seite der Platte wird in einer Lackierstrasse mit mehreren Lackaufträgen ablackiert. Dabei wird zunächst ein korundgefüllter UV-Grundlack aufgetragen (Auftragsmenge etwa 80 g/m²). Dieser wird mit einem UV-Strahler angeliert. Danach wird ein elastischer Zwischenlack, ein ESH-Lack aufgetragen (Auftragsmenge etwa 50 g/m²). Dieser wird mit einem Elektronenstrahler angehärtet. Anschließend wird ein ESH-Decklack aufgetragen, der mit Nanopartikeln zur Steigerung der Microkratzfestigkeit ausgerüstet ist (Auftragsmenge etwa 20 g/m²). Dieser Lack wird zunächst mit einem Eximerstrahler in der Oberfläche angehärtet (dies geschieht zur Mattierung durch Mikrofaltung der Lackoberfläche) und anschließend der gesamte Lackaufbau mit einem ESH-Strahler endgehärtet im Sinne von durchgehärtet.

Aus den großformatigen Platten werden nach einer Ruhezeit von etwa zwei Tagen an einer Fußbodenstraße Paneele hergestellt, die mit Verbindungsprofilen an den Seitenkanten ausgestattet sind, die zur leimlosen Verbindung und Verriegelung solcher Paneele zu einem schwimmend verlegten Fußbodenbelag geeignet sind.

### Ausführungsbeispiel 4: WPC mit direkt auf das vorverdichtete Vlies aufkaschierter dekorativer Papierlage (Finishfolie)

In Analogie zu Ausführungsbeispiel 1a werden Vorvliese bzw. Faserkuchenzuschnitte hergestellt. Hinter dem Durchströmungsofen lief das vorverdichtete Vlies in eine Behandlungsstation, in der über Walzen ca. 200 g PMDI / m² (ca. 6 Gew.% pro Platte) aufgetragen wurden. Unter dem Faserkuchen befand sich eine Saugvorrichtung, die durch einen anliegenden Unterdruck die Penetration des PMDI in den Faserkuchen beschleunigte und überschüssiges PMDI aufnehmen konnte.
Die so hergestellten Vorvliese bzw. Faserkuchenzuschnitte wurden mittels Transportband zu einer Doppelbandpresse weitertransportiert. Die Doppelbandpresse besaß eine Heizzone mit einer Länge von sechs Metern und eine Kühlzone mit einer Länge von neun Metern.

Von oben wurde über eine Abwickelvorrichtung eine dekorative Finishfolie auf den Faserkuchen aufgelegt, das auf der Oberseite mit einem korundhaltigen, strahlenhärtenden Lack ablackiert war. Das Gewicht des lackierten Papiers lag bei ca. 200 g/m². Mit einer zweiten Abwickelvorrichtung wurde auf die dekorative Folie ein Trennpapier aufgebracht. Auf die Unterseite des Faserkuchens wurde über eine Abwickelvorrichtung ein Gegenzugpapier (Grammatur: 80 g/m²) zugeführt.

Der Faserkuchen lief dann in die Doppelbandpresse ein und wurde bei einem Vorschub von 2 m/min., einem Druck von 30 bar und einer Temperatur am oberen und unteren Stahlband von 160 °C auf eine Stärke von 4,5 mm komprimiert. Mit einem mitlaufenden Thermoelement wurde die Temperatur in der Faserkuchenmitte bestimmt. Sie lag am Ende bei 140 °C.

Hinter der Presse wurde das Trennpapier aufgewickelt. Das dekorative Papier und das Gegenzugpapier waren homogen und faltenfrei auf die während des Pressvorgangs entstandene WPC-Platte (WPC =wood plastic composites, Holz-Kunststoff-Verbundwerkstoff) aufgepresst worden. Beim Gitterschnitttest konnte das dekorative Papier nur mit vollflächigem Faserbesatz auf der Rückseite abgeschält werden, was auf eine sehr gute Verbindung zwischen Folie und WPC-Platte schließen lässt.

### Ausführungsbeispiel 5: Direktbeschichtung auf WPC

Eine z.B. gemäß den Ausführungsbeispielen 1a, b, c hergestellte WPC-Platte wurde in einer Kurztakt-Presse mit einem Aufbau beschichtet, der üblicherweise für einen Laminatboden verwendet wird. Dieser war folgendermaßen:
- Oberseite
   - Overlay mit Melaminharzimprägnierung (korundgefüllt),
   - Dekorpapier mit Melaminharzimprägnierung
- Unterseite
   - Gegenzug mit Melaminharzimprägnierung

Bei den imprägnierten Papieren handelte es sich bezüglich Harzauftrag, VC-Wert (VC-Wert = Gehalt an flüchtigen Bestandteilen) und der Reaktivität um Standardprodukte. Die Beschichtung wurde bei ca. 150 °C (Temperatur am Produkt), 40 bar und 15 Sekunden Presszeit ausgeführt. Anschließend wurde die beschichtete Platte abgekühlt und nach einer definierten Lagerzeit an einer Fußbodenstraße zu Dielen mit einem leimlosen Verbindungsprofil aufgetrennt. Aus der Produktion wurden Dielen entnommen und gemäß der DIN EN 13329 einem Kantenquelltest unterworfen. Dabei wurde nach 24 h Prüfdauer eine Kantenquellung im Bereich von 1,51 bis 1,21 % festgestellt. Nach dem Rücktrocknen bei Raumtemperatur ging diese auf 0,5 % zurück.

## Patentansprüche

1. Verfahren zur Herstellung einer Holzwerkstoffplatte, insbesondere in Form eines Holz-Kunststoff-Verbundwerkstoffes, umfassend die Schritte:
• Aufbringen eines Gemisches aus Holzpartikeln und einem mit mindestens einer organischen Verbindung funktionalisierten Kunststoff, auf ein erstes Transportband (3) unter Ausbildung eines Vorvlieses und Einführen des Vorvlieses in mindestens einen ersten Temperofen (4) zum Vorverdichten;
• Auftragen eines Isocyanat-Klebstoffs auf mindestens einer Seite des vorverdichteten Vlieses,
• teilweises oder vollständiges Imprägnieren des vorverdichteten Vlieses mit dem Isocyanat-Klebstoff;
• Überführen des vorverdichteten Vlieses in mindestens eine Doppelbandpresse (8) zum weiteren Verdichten zu einer Holzwerkstoffplatte; und
• optional Abkühlen der verdichteten Holzwerkstoffplatte, z.B. in mindestens einer Kühlpresse (10), wobei das teilweise oder vollständige Imprägnieren des vorverdichteten Vlieses durch:
• Auftragen des Isocyanat-Klebstoffs auf die Oberseite des vorverdichteten Vlieses während der Herstellung der Holzwerkstoffplatte;
• Anlegen eines Vakuums oder Unterdrucks unterhalb des vorverdichteten Vlieses während und/oder nach dem Auftragen des Isocyanat-Klebstoffs; und/oder
• Anlegen von Druck von oben während und/oder nach dem Auftragen des Isocyanat-Klebstoffs; und/oder
• Erwärmen des Isocyanat-Klebstoffs zur Erniedrigung der Viskosität des Isocyanat-Klebstoffs und zur Erleichterung der Durchimprägnierung des vorverdichteten Vlieses, wobei der Isocyanat-Klebstoff typischerweise auf Temperaturen zwischen 30 - 70°C erwärmt wird;
erreicht wird.

2. Verfahren nach Anspruch 1, **dadurch gekennzeichnet, dass** das Auftragen des Isocyanat-Klebstoffs durch Sprühen, Walzen, Saugen oder Kombinationen daraus erfolgt.

3. Verfahren nach Anspruch 1 oder 2, **dadurch gekennzeichnet, dass** das vorverdichtete Vlies in die mindestens eine Doppelbandpresse (8) unter simultanen Aufbringen von mindestens einer dekorativen Finish-Folie auf die Oberseite des vorverdichteten Vlieses zum weiteren Verdichten überführt wird.

4. Verfahren nach einem der Ansprüche 1 bis 3, **dadurch gekennzeichnet, dass** mindestens eine Dekorschicht auf mindestens eine Seite der Holzwerkstoffplatte aufgetragen wird.

5. Holzwerkstoffplatte, insbesondere eine Holz-Kunststoff-Verbundwerkstoffplatte, hergestellt nach dem Verfahren nach einem der Ansprüche 1 bis 4,
umfassend
ein Gemisch aus Holzpartikeln und mindestens einem mit mindestens einer organischen Verbindung funktionalisierten Kunststoff, wobei auf mindestens einer Seite der Holzwerkstoffplatte mindestens eine Dekorschicht vorgesehen ist, und das Gemisch aus Holzpartikeln und dem mindestens einen mit mindestens einer organischen Verbindung funktionalisierten Kunststoff teilweise oder vollständig mit einem Isocyanat-Kleber imprägniert ist.

6. Holzwerkstoffplatte nach Anspruch 5, **dadurch gekennzeichnet, dass** der Kunststoff ein thermoplastischer Kunststoff, vorzugsweise in Form von thermoplastischen Granulaten oder Kunststofffasern, insbesondere ausgewählt aus der Gruppe enthaltend Polyethylen (PE), Polypropylen (PP), Polyester, wie Polyethylenterephthalat, oder Mischungen davon, insbesondere von Polypropylen (PP) und Polyethylen (PE), ist.

7. Holzwerkstoffplatte nach Anspruch 5 oder 6, **dadurch gekennzeichnet, dass** die mindestens eine organische Verbindung mindestens eine funktionelle Gruppe aufweist, wobei die funktionelle Gruppe ausgewählt ist aus einer Gruppe enthaltend -CO₂H, - CONH2, -COO-, insbesondere Maleinsäure, Phthalsäure, Bernsteinsäure, Glutarsäure, Adipinsäure oder deren Anhydride, Succinimid.

8. Holzwerkstoffplatte nach einem der Ansprüche 5 bis 7, **dadurch gekennzeichnet, dass** der Isocyanat-Kleber ein Polyurethan-Klebstoff oder ein Präpolymer davon ist.

9. Holzwerkstoffplatte nach einem der Ansprüche 5 bis 8, **dadurch gekennzeichnet, dass** das Mischungsverhältnis von dem Holzpartikel-Kunststoff-Gemisch zu einem Isocyanat-Klebstoff zwischen 90 Gew.% : 10 Gew.%, vorzugsweise 92 Gew.% : 8 Gew.%, besonders bevorzugt 94 Gew.% : 10 Gew.% oder 96 Gew.%: 4 Gew.% beträgt.

10. Holzwerkstoffplatte nach einem der Ansprüche 5 bis 9, **dadurch gekennzeichnet, dass** die mindestens eine Dekorschicht mindestens eine Dekorfolie bestehend aus mindestens einer thermoplastischen Tragschicht, aus mindestens einem auf der Tragschicht aufgedruckten Dekor oder mindestens einer separaten Dekorlage und mindestens einer Kunststoffversiegelung umfasst, wobei die Dekorfolie auf die Holzwerkstoffplatte unter Verwendung von mindestens einem Kleber aufkaschiert ist.

11. Holzwerkstoffplatte nach einem der Ansprüche 5 bis 10, **dadurch gekennzeichnet, dass** die mindestens eine Dekorschicht mindestens eine Dekorfolie bestehend aus mindestens einer thermoplastischen Tragschicht, mindestens einem auf der Tragschicht aufgedruckten Dekor oder mindestens einer separaten Dekorlage und mindestens einer Kunststoffversiegelung umfasst, wobei die Dekorfolie während des Herstellungsprozesses der Holzwerkstoffplatte auf das vorverdichtete Vlies aufgelegt wird und zusammen mit dem vorverdichteten Vlies weiter zur Holzwerkstoffplatte verdichtet wird,
oder
dass die mindestens eines Dekorschicht eine dekorative Finish-Folie umfasst, welche aus einem aminoharzgefüllten Dekorpapier und mindestens einer Lackschicht besteht, wobei die dekorative Finish-Folie auf die Holzwerkstoffplatte unter Verwendung von mindestens einem Kleber aufkaschiert ist.

12. Holzwerkstoffplatte nach Anspruch 11, **dadurch gekennzeichnet, dass** die dekorative Finish-Folie nach dem Aufkaschieren auf die Holzwerkstoffplatte mit mindestens einer weiteren Lackschicht, bevorzugt zwei oder drei Lackschichten, aus einem UV-härtbaren und/oder einem Elektronenstrahlhärtbaren (ESH)-Lack versehen wird.

13. Holzwerkstoffplatte nach einem der Ansprüche 5 bis 8, **dadurch gekennzeichnet, dass** die mindestens eine Dekorschicht mindestens eine aminoharzimprägnierte Dekorpapierlage und gegebenenfalls mindestens eine Overlaypapierlage umfasst, wobei die Dekorpapierlage und gegebenenfalls die Overlaypapierlage mit der Holzwerkstoffplatte verpresst werden.

14. Holzwerkstoffplatte nach einem der Ansprüche 5 bis 13, **dadurch gekennzeichnet, dass** auf mindestens einer Seite, bevorzugt der der Dekorschicht gegenüberliegenden Seite, mindestens ein Gegenzugpapier aufgetragen ist.

## Claims

1. Process for the production of a wood-composite board, in particular in the form of a wood-plastic-composite, comprising the steps of:
• application, onto a first conveyor belt (3), of a mixture of wood particles with a plastic functionalized by use of at least one organic compound, with formation of a preliminary web, and introduction of the preliminary web into at least one first heat-conditioning oven (4) for precompaction;
• application of an isocyanate adhesive on at least one side of the precompacted web,
• partial or complete impregnation of the precompacted web by the isocyanate adhesive;
• transfer of the precompacted web into at least one twin-belt press (8) for further compaction to give a wood-composite board; and
• optionally cooling of the compacted wood-composite board, e.g. in at least one cooling press (10),
where
the partial or complete impregnation of the precompacted web is achieved via:
• application of the isocyanate adhesive onto the upper side of the precompacted web during the production of the wood-composite board;
• application of a vacuum or reduced pressure below the precompacted web during and/or after the application of the isocyanate adhesive; and/or
• application of pressure from above during and/or after the application of the isocyanate adhesive; and/or
• heating of the isocyanate adhesive to reduce the viscosity of the isocyanate adhesive and to facilitate impregnation through the precompacted web, where the isocyanate adhesive is typically heated to temperatures of from 30 to 70°C.

2. Process according to Claim 1, **characterized in that** the application of the isocyanate adhesive is achieved via spraying, rolling, suction or a combination thereof.

3. Process according to Claim 1 or 2, **characterized in that**, for further compaction, the precompacted web is transferred into the at least one twin-belt press (8) with simultaneous application of at least one decorative finishing film onto the upper side of the precompacted web.

4. Process according to any of Claims 1 to 3, **characterized in that** at least one decorative layer is applied onto at least one side of the wood-composite board.

5. Wood-composite board, in particular a wood-plastic-composite board, produced by the process according to any of Claims 1 to 4,
comprising
a mixture of wood particles with at least one plastic functionalized by use of at least one organic compound, where there is at least one decorative layer provided on at least one side of the wood-composite board, and the mixture of wood particles with the at least one plastic functionalized by use of at least one organic compound has been partially or completely impregnated by an isocyanate adhesive.

6. Wood-composite board according to Claim 5, **characterized in that** the plastic is a thermoplastic, preferably in the form of thermoplastic granulates or synthetic fibres, in particular selected from the group comprising polyethylene (PE), polypropylene (PP), polyester, for example polyethylene terephthalate, or a mixture thereof, in particular of polypropylene (PP) and polyethylene (PE).

7. Wood-composite board according to Claim 5 or 6, **characterized in that** the at least one organic compound has at least one functional group, where the functional group is selected from a group comprising -CO₂H, -CONH₂, -COO-, in particular maleic acid, phthalic acid, succinic acid, glutaric acid, adipic acid and anhydrides thereof, and succinimide.

8. Wood-composite board according to any of Claims 5 to 7, **characterized in that** the isocyanate adhesive is a polyurethane adhesive or a prepolymer thereof.

9. Wood-composite board according to any of Claims 5 to 8, **characterized in that** the mixing ratio of the wood particle-plastic mixture to an isocyanate adhesive is 90% by weight:10% by weight, preferably 92% by weight:8% by weight, with particular preference 94% by weight:10% by weight or 96% by weight:4% by weight.

10. Wood-composite board according to any of Claims 5 to 9, **characterized in that** the at least one decorative layer comprises at least one decorative film consisting of at least one thermoplastic backing layer and of at least one decorative effect printed on the backing layer, or of at least one separate decorative ply and of at least one plastic sealing system, where the decorative film has been laminated onto the wood-composite board with use of at least one adhesive.

11. Wood-composite board according to any of Claims 5 to 10, **characterized in that** the at least one decorative layer comprises at least one decorative film consisting of at least one thermoplastic backing layer and of at least one decorative effect printed on the backing layer, or of at least one separate decorative ply and of at least one plastic sealing system, where the decorative film is superposed onto the precompacted web during the process to produce the wood-composite board, and, together with the precompacted web, is further compacted to give the wood-composite board,
or
that the at least one decorative layer comprises a decorative finishing film which consists of an amino-resin-filled decorative paper and of at least one lacquer layer, where the decorative finishing film has been laminated onto the wood-composite board with use of at least one adhesive.

12. Wood-composite board according to Claim 11, **characterized in that**, after the decorative finishing film has been laminated onto the wood-composite board, at least one further lacquer layer, preferably two or three lacquer layers, made of a UV-curable and/or an electron-beam-curable (ESH) lacquer is provided to the said finishing film.

13. Wood-composite board according to any of Claims 5 to 8, **characterized in that** the at least one decorative layer comprises at least one amino-resin-impregnated decorative paper ply and optionally at least one overlay paper ply, where the decorative paper ply and optionally the overlay paper ply are pressed with the wood-composite board.

14. Wood-composite board according to any of Claims 5 to 13, **characterized in that** there is at least one counterbalancing paper applied on at least one side, preferably the side opposite to the decorative layer.

## Revendications

1. Procédé de fabrication d'une plaque en bois, en particulier sous la forme d'un matériau composite bois-plastique, comprenant les étapes suivantes:
• déposer un mélange de particules de bois et d'une matière plastique fonctionnalisée avec au moins un composé organique, sur une première bande transporteuse (3) avec formation d'un pré-tapis et introduire le pré-tapis dans au moins un four de recuit (4) pour une pré-compression;
• déposer une colle isocyanate sur au moins un côté du tapis pré-comprimé;
• imprégner partiellement ou entièrement le tapis pré-comprimé avec la colle isocyanate;
• transférer le tapis pré-comprimé dans au moins une presse à double bande (8) pour la compression ultérieure en une plaque en bois; et
• en option refroidir la plaque en bois pré-comprimée, par exemple dans au moins une presse de refroidissement (10),
dans lequel on atteint l'imprégnation partielle ou entière du tapis pré-comprimé par:
• dépôt de la colle isocyanate sur le côté supérieur du tapis pré-comprimé pendant la fabrication de la plaque en bois;
• application d'un vide ou d'une dépression en dessous du tapis pré-comprimé pendant et/ou après le dépôt de la colle isocyanate; et/ou
• application de pression par le haut pendant et/ou après le dépôt de la colle isocyanate; et/ou
• chauffage de la colle isocyanate afin d'abaisser la viscosité de la colle isocyanate et de faciliter l'imprégnation à coeur du tapis pré-comprimé, la colle isocyanate étant typiquement chauffée à des températures comprises entre 30°C et 70°C.

2. Procédé selon la revendication 1, **caractérisé en ce que** l'on effectue le dépôt de la colle isocyanate par projection, laminage, aspiration ou par des combinaisons de ces opérations.

3. Procédé selon la revendication 1 ou 2, **caractérisé en ce que** l'on transfère le tapis pré-comprimé dans ladite au moins une presse à double bande (8) avec application simultanée d'au moins un feuille de finition décorative sur le côté supérieur du tapis pré-comprimé en vue de la compression ultérieure.

4. Procédé selon l'une quelconque des revendications 1 à 3, **caractérisé en ce que** l'on dépose au moins une couche décorative sur au moins un côté de la plaque en bois.

5. Plaque en bois, en particulier plaque en matériau composite bois-plastique, fabriquée par le procédé selon l'une quelconque des revendications 1 à 4, comprenant un mélange de particules de bois et d'au moins une matière plastique fonctionnalisée avec au moins un composé organique, dans laquelle il est prévu au moins une couche décorative sur au moins un côté de la plaque en bois, et le mélange de particules de bois et de la matière plastique fonctionnalisée avec au moins un composé organique est imprégné partiellement ou entièrement avec une colle isocyanate.

6. Plaque en bois selon la revendication 5, **caractérisée en ce que** la matière plastique est une matière plastique thermoplastique, de préférence sous la forme de granulats ou de fibres de matière plastique thermoplastiques, en particulier sélectionnée dans le groupe contenant le polyéthylène (PE), le polypropylène (PP), un polyester, comme le téréphtalate de polyéthylène, ou des mélanges de ceux-ci, en particulier de polypropylène (PP) et de polyéthylène (PE).

7. Plaque en bois selon la revendication 5 ou 6, **caractérisée en ce que** ledit au moins un composé organique présente au moins un groupe fonctionnel, dans laquelle le groupe fonctionnel est sélectionné dans un groupe contenant -CO₂H, -CONH₂, -COO-, en particulier l'acide maléique, l'acide phtalique, l'acide succinique, l'acide glutarique, l'acide adipique ou leurs anhydrides, leurs succinimides.

8. Plaque en bois selon l'une quelconque des revendications 5 à 7, **caractérisée en ce que** la colle isocyanate est une colle polyuréthane ou un pré-polymère de celui-ci.

9. Plaque en bois selon l'une quelconque des revendications 5 à 8, **caractérisée en ce que** la proportion de mélange du mélange particules de bois-matière plastique à une colle isocyanate vaut entre 90 % en poids:10 % en poids, de préférence 92 % en poids:8 % en poids, de préférence encore 94 % en poids:10 % en poids ou 96 % en poids:4 % en poids.

10. Plaque en bois selon l'une quelconque des revendications 5 à 9, **caractérisée en ce que** ladite au moins une couche décorative comprend au moins une feuille décorative composée d'au moins une couche de support thermoplastique, d'au moins un décor imprimé sur la couche de support ou d'au moins une couche décorative séparée et d'au moins une finition en matière plastique, dans laquelle la feuille décorative est contrecollée sur la plaque en bois avec utilisation d'au moins une colle.

11. Plaque en bois selon l'une quelconque des revendications 5 à 10, **caractérisée en ce que** ladite au moins une couche décorative comprend au moins une feuille décorative composée d'au moins une couche de support thermoplastique, d'au moins un décor imprimé sur la couche de support ou d'au moins une couche décorative séparée et d'au moins une finition en matière plastique, dans laquelle la feuille décorative est appliquée sur le tapis pré-comprimé pendant le processus de fabrication de la plaque en bois et est ensuite comprimée avec le tapis pré-comprimé en une plaque en bois, ou **en ce que** ladite au moins une couche décorative comprend une feuille de finition décorative, qui se compose d'un papier décoratif à la résine aminée et d'au moins une couche de laque, dans laquelle la feuille de finition décorative est contrecollée sur la plaque en bois avec utilisation d'au moins une colle.

12. Plaque en bois selon la revendication 11, **caractérisée en ce qu'**après le contre-collage sur la plaque en bois, la feuille de finition décorative est munie d'au moins une autre couche de laque, de préférence de deux ou de trois couches de laque, en une laque durcissable aux UV et/ou durcissable par faisceau d'électrons (ESH).

13. Plaque en bois selon l'une quelconque des revendications 5 à 8, **caractérisée en ce que** ladite au moins une couche décorative comprend au moins une couche de papier décoratif imprégné de résine aminée et éventuellement au moins une couche de papier overlay, dans laquelle la couche de papier décoratif et éventuellement la couche de papier overlay sont pressées avec la plaque en bois.

14. Plaque en bois selon l'une quelconque des revendications 5 à 13, **caractérisée en ce qu'**au moins un papier de contretraction est appliqué sur au moins un côté, en particulier sur le côté opposé à la couche décorative.
